# EUROPÄISCHE PATENTANMELDUNG

(11) **EP 2 634 594 A1**
(43) Veröffentlichungstag der Anmeldung: **04.09.2013**
(21) Anmeldenummer: 12157806.6
(22) Anmeldetag: 01.03.2012
(51) Int. Cl.: G01S 7/48

(54) **Verfahren zum Bestimmen einer Entfernungsänderung mittels Interferometrie**

(71) Anmelder: Leica Geosystems AG, 9435 Heerbrugg (CH)
(72) Erfinder: Kwiatkowski, Tomasz, 5054 Moosleerau (CH); Lüthi, Thomas, 8400 Winterthur (CH)
(74) Vertreter: Kaminski Harmann

(57) **Zusammenfassung**

Verfahren zum Bestimmen einer Entfernungsänderung zu einem beweglichen und reflektierenden Ziel mittels Interferometrie, mit einem Erzeugen von Laserstrahlung, wobei aus der Laserstrahlung zumindest eine Referenzstrahlung und eine Messstrahlung abgeleitet werden, mit einem Aussenden der Messstrahlung zum Ziel und mit einem Erfassen von zumindest einem Teil der am Ziel reflektierten Messstrahlung. Ausserdem erfolgt ein Erzeugen und Erfassen einer Überlagerung der reflektierten Messstrahlung mit der Referenzstrahlung, ein Ableiten einer Interferometerausgangsgrösse basierend auf der erfassten Überlagerung und ein Erzeugen eines zeitaufgelösten Ausgangsgrössenverlaufs aus der abgeleiteten Interferometerausgangsgrösse. Zudem erfolgt ein fortlaufendes Überprüfen des Ausgangsgrössenverlaufs dadurch, dass der Ausgangsgrössenverlauf fortlaufend zeitaufgelöst ausgelesen wird, in Abhängigkeit von dem zeitaufgelöst ausgelesenen Ausgangsgrössenverlauf fortlaufend zumindest ein Bewegungsparameter für eine Relativbewegung zwischen dem Messgerät und dem Ziel abgeleitet wird und ein fortlaufendes Vergleichen des Bewegungsparameters mit einem Bewegungskriterium für das Ziel erfolgt, wobei das Bewegungskriterium eine als real ausführbar, praktisch plausibel und empirisch angenommene Relativbewegung des Ziels in Richtung der Messstrahlung angibt. Eine Information wird in Abhängigkeit des Vergleichens, insbesondere bei Nicht-Erfüllen des Bewegungskriteriums, bereitgestellt.

## Beschreibung

Die Erfindung betrifft ein Verfahren für ein Bestimmen einer Entfernungsänderung zu einem beweglichen und reflektierenden Ziel nach dem Oberbegriff des Anspruchs 1 und ein Messgerät zur Ausführung des erfindungsgemässen Verfahrens nach Anspruch 12.

Messgeräte, die für eine fortlaufende Verfolgung eines Zielpunkts und eine koordinative Positionsbestimmung dieses Punkts ausgebildet sind, können allgemein, insbesondere im Zusammenhang mit industrieller Vermessung, unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zum Messgerät reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von dem Messgerät zum Zielpunkt, z.B. mittels Laufzeit- oder Phasendifferenzmessung ermittelt.

Lasertracker nach dem Stand der Technik können zusätzlich mit einer optischen Bilderfassungseinheit mit einem zweidimensionalen, lichtempfindlichen Array, z.B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z.B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines so genannten Messhilfsinstruments mit Markierungen, deren relative Lagen zueinander bekannt sind, kann auf eine Orientierung des Instruments und eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, z.B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Ausserdem wird in modernen Trackersystemen - zunehmend standardisiert - auf einem Sensor eine Ablage des empfangenen Messstrahls von einer Nullposition ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Vermessungsgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Der beschriebenen Zielverfolgung muss ein Ankoppeln des Laserstrahls an den Reflektor vorausgehen. Hierzu kann am Tracker zusätzlich eine Erfassungseinheit mit einem positionssensitiven Sensor und mit einem verhältnismässig grossen Sichtfeld angeordnet sein. Zudem sind in gattungsgemässe Geräte zusätzliche Beleuchtungsmittel integriert, mit welchen das Ziel bzw. der Reflektor, insbesondere mit einer definierten, sich von der Wellenlänge der Distanzmessmittel unterscheidenden Wellenlänge, beleuchtet wird. Der Sensor kann in diesem Zusammenhang sensitiv auf einen Bereich um diese bestimmte Wellenlänge ausgebildet sein, um beispielsweise Fremdlichteinflüsse zu reduzieren oder gänzlich zu verhindern. Mittels der Beleuchtungsmittel kann das Ziel beleuchtet und mit der Kamera ein Bild des Ziels mit beleuchtetem Reflektor erfasst werden. Durch die Abbildung des spezifischen (wellenlängenspezifischen) Reflexes auf dem Sensor können die Reflexposition im Bild aufgelöst und damit ein Winkel relativ zur Erfassungsrichtung der Kamera und eine Richtung zum Ziel bzw. Reflektor bestimmt werden. Eine Ausführungsform eines Lasertrackers mit einer derartigen Zielsucheinheit ist beispielsweise aus der WO 2010/148525 Al bekannt. In Abhängigkeit der so ableitbaren Richtungsinformation kann die Ausrichtung des Messlaserstrahls derart verändert werden, dass ein Abstand zwischen dem Laserstrahl und dem Reflektor, an welchen der Laserstrahl angekoppelt werden soll, verkleinert wird.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Beispielsweise ist eine derartige Kombination von Messmitteln zur Entfernungsbestimmung durch das Produkt AT901 der Leica Geosystems AG bekannt. Die in diesem Zusammenhang für die Distanzmessung eingesetzten Interferometer verwenden hauptsächlich - aufgrund der grossen Kohärenzlänge und der damit ermöglichten Messreichweite - Gaslaser als Lichtquellen, insbesondere HeNe-Gaslaser. Die Kohärenzlänge des HeNe-Lasers kann dabei einige hundert Meter betragen, so dass mit relativ einfachen Interferometer-Aufbauten die in der industriellen Messtechnik geforderten Reichweiten erzielt werden können. Eine Kombination eines Absolutdistanzmessers und eines Interferometers zur Entfernungsbestimmung mit einem HeNe-Laser ist beispielsweise aus der WO 2007/079600 A1 bekannt.

Durch die Verwendung eines solchen Interferometers zur Distanzbestimmung bzw. Bestimmung der Distanzänderung in einem Lasertracker kann aufgrund des so einsetzbaren interferometrischen Messverfahrens eine sehr hohe Messgenauigkeit realisiert werden.

Dieser vorteilhaften Messgenauigkeit steht jedoch die Robustheit und Verlässlichkeit der auszuführenden Interferometermessung nachteilig gegenüber. Zur Ausführung einer korrekten Messung der Distanzänderung, insbesondere einer fortlaufend korrekten Messung bei einer Verfolgung eines Ziels, mittels des Interferometers muss ein während der Messung dauerhaftes Erfassen und korrektes Auslesen der durch Interferenzeffekte (Intensitätsmaxima und -minima) erzeugten Interferometerpulse gewährleistet sein. Die Bestimmung der Distanzänderung hängt dabei ab von der Anzahl der detektierten Interferometerpulse. Ein ununterbrochenes Empfangen und Erkennen der Interferometerpulse kann insbesondere bei einer grossen Entfernung zwischen dem Interferometer und dem Ziel gestört sein, da die dabei vom Ziel reflektierte Messstrahlung mit vergleichsweise geringer Intensität erfasst wird und die verfügbare Sensitivität des Interferometerdetektors nicht ausreicht die Pulse klar zu erfassen. Durch ein dadurch verursachtes Verlorengehen eins oder mehrerer Interferometerpulse während des Erfassens kann die davon abhängige Bestimmung der Distanzänderung fehlerbehaftet sein. Ein fehlerhaftes Erfassen der Pulse (ein oder mehrere Pulse werden nicht gezählt) kann ausserdem verursacht werden durch ein schnelles Versetzen des reflektierenden Ziels und eine somit erzeugte Intensitätsfluktuation bzw. Intensitätsreduktion am Interferometerdetektor. Dies kann insbesondere während eines Trackings eines Ziels auftreten, wenn die Bewegung des Reflektors schneller erfolgt als ein servogesteuertes Nachführen der Laserstrahlung zum Ziel durchführbar ist. Da die bestimmbare Entfernungsänderung von der Anzahl erkannter Pulse abhängt, kann dadurch ein fehlerhafter Distanzmesswert erzeugt werden.

Ein weiterer nachteiliger Aspekt in diesem Zusammenhang ist, dass bei einer oben beschriebenen fehlerhaften Messung zwar ein Messwert erzeugt werden kann, jedoch ein Benutzer des Systems diesem Messfehler nicht erkennt bzw. aufgrund der erreichbaren Messauflösung diesen nicht erkennen kann und den erzeugten Messwert als korrekt annimmt. Durch ein wiederholtes derartiges Nicht-Berücksichtigen des Fehlers können einzelne Fehlmessungen kumuliert und ein resultierender (Gesamt-) Messfehler somit vergrössert werden.

Es ist daher eine Aufgabe der vorliegenden Erfindung eine Funktion für ein Messgerät, insbesondere Lasertracker, bereitzustellen, in deren Rahmen eine interferometrische Messung auf deren Korrektheit überprüft wird, insbesondere fortlaufend überprüft wird.

Im Speziellen ist es eine Aufgabe der vorliegenden Erfindung eine Überprüfungsfunktionalität für eine Bestimmung einer Distanzänderung, insbesondere für ein Messgerät, insbesondere Lasertracker, derart bereitzustellen, dass ein allfälliger Messfehler erkannt wird und bei einem Vorliegen eines Messfehlers eine entsprechende Information ausgegeben wird.

Eine weitere Aufgabe der Erfindung ist es einen Lasertracker bereitzustellen, mit welchem eine Überprüfung einer zur Bestimmung einer Distanzänderung ausführbaren Messung mit einem Interferometer hinsichtlich deren Korrektheit durchführbar ist.

Eine weitere Aufgabe der Erfindung ist es eine automatisierte Funktionalität zur Korrektur von als fehlerhaft identifizierten Messwerten bereitzustellen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Verfahren zum Bestimmen einer Entfernungsänderung zu einem beweglichen und reflektierenden Ziel mittels Interferometrie, mit einem Aussenden von Messstrahlung zum Ziel, einem Empfangen von zumindest einem Teil der am Ziel reflektierten Messstrahlung und einem Erzeugen und Erfassen einer Überlagerung der reflektierten Messstrahlung mit einer Referenzstrahlung. Zudem erfolgen ein Ableiten einer Interferometerausgangsgrösse basierend zumindest auf der erfassten Überlagerung, wobei die Interferometerausgangsgrösse von einer Entfernung zum Ziel abhängt, ein Erzeugen eines zeitaufgelösten Ausgangsgrössenverlaufs aus der abgeleiteten Interferometerausgangsgrösse und ein Ermitteln der Entfernungsänderung basierend auf dem Ausgangsgrössenverlauf.

Weiter erfolgt ein fortlaufendes Überprüfen des Ausgangsgrössenverlaufs dadurch, dass basierend auf dem Ausgangsgrössenverlauf fortlaufend zumindest ein sich auf die Richtung der Messstrahlung beziehender Bewegungsparameter einer Relativbewegung des Ziels abgeleitet wird, ein fortlaufendes Vergleichen des Bewegungsparameters mit einem definierten Bewegungskriterium des Ziels erfolgt, wobei das Bewegungskriterium eine als real ausführbar, praktisch plausibel und empirisch angenommene Relativbewegung des Ziels in Richtung der Messstrahlung angibt, und bei einem Nicht-Erfüllen des Bewegungskriteriums eine Information bereitgestellt wird.

Im Rahmen des erfindungsgemässen Verfahrens kann somit eine automatisierte Beurteilung einer durchgeführten interferometrischen Messung hinsichtlich deren Richtigkeit durchgeführt werden. Nach der Überprüfung ob eine aus den Interferometerdaten ableitbare Bewegung des Ziels bzw. eines interferometrischen Messgeräts einer Bewegung entspricht, die unter vorherrschenden physikalischen Bedingungen und gegebenenfalls im Rahmen der vorliegenden Messanordnung (z.B. mit Hindernissen in einem Messraum, die eine bestimmte Bewegung unmöglich machen) tatsächlich ausgeführt werden kann, kann die Information, d.h. eine Information die insbesondere einem Benutzer Aufschluss darüber bringt, ob oder mit welcher Wahrscheinlichkeit die Messung fehlerbehaftet ist, z.B. auf einem Display graphisch dargestellt oder mittels eines akustischen Signals ausgegeben werden.

Insbesondere können durch eine Angabe durch das Bewegungskriterium für eine im Rahmen von tatsächlich geltenden physikalischen Grundsätzen durchführbare Bewegung ebenfalls inverse Bedingungen für unmögliche Relativbewegungen, welche z.B. gegen geltende physikalische Gesetzt verstossen würde (z.B. Trägheit), definiert sein. Generell gibt das Bewegungskriterium einen Rahmen vor innerhalb dessen eine mittels einer interferometrischen Messung bestimmte Relativbewegung potentiell tatsächlich durchführbar bzw. nicht durchführbar wäre. Somit kann auf Basis dieses Kriteriums eine Entscheidung getroffen werden, ob eine gemessene Bewegung abzulehnen oder zu akzeptieren ist.

Im Allgemeinen ist in Rahmen dieser Erfindung die Interferometerausgangsgrösse zu verstehen als Grösse, welche durch ein Interferometer bereitgestellt bzw. von diesem ausgegeben wird und aus welcher durch ein fortlaufendes Erfassen dieser Grösse als Ausgangsgrössenverlauf eine Entfernungsänderung zu einem Ziel ableitbar ist.

Für homodyne Interferometer ist die Interferometerausgangsgrösse zu verstehen als von einer Entfernung zum Ziel abhängiger Interferenzzustand (konstruktive bzw. destruktive Interferenz) und der Ausgangsgrössenverlauf zu verstehen als Interferenzverlauf, erzeugt durch ein fortlaufendes Erfassen des Interferenzzustands.

Für heterodyne Interferometer ist die Interferometerausgangsgrösse zu verstehen als ein Vergleich einer Phasenlage zwischen einer Messüberlagerung (Schwebung erzeugt durch ein Zusammenführen einer Messstrahlung und einer Referenzstrahl mit unterschiedlichen Wellenlängen) an einem Messdetektor und einer Referenzgrösse bzw. einer Schwebung an einem Referenzdetektor (Referenzüberlagerung). Die Referenzgrösse kann dabei beispielsweise elektronisch erzeugt sein durch eine Modulationsfrequenz eines akustooptischen Modulators zur Modulation von zumindest einer der Strahlungen (Messstrahlung und/oder Referenzstrahlung). Der Ausgangsgrössenverlauf ist für ein heterodynes Interferometer zu verstehen als zeitaufgelöst, fortlaufend erfasster Vergleich (Phasenunterschied) der Messüberlagerung mit der Referenzgrösse bzw. mit der Referenzüberlagerung.

Insbesondere können dem Fachmann weitere Ausführungsformen für Interferometer bekannt sein, wobei für eine derartige Ausführungsform die Interferometerausgangsgrösse jene Grösse ist, durch die mittels eines fortlaufenden Erfassens dieser Grösse (Ausgangsgrössenverlauf) eine Entfernungsänderung detektiert werden kann.

Durch das erfindungsgemässe fortlaufende Überprüfen des Ausgangsgrössenverlaufs kann für diese unterschiedlichen Ausführungsformen von Interferometern eine Relativbewegung des Ziels hinsichtlich einer real ausführbaren Bewegung bewertet werden.

Der Ausgangsgrössenverlauf kann im Sinne der Erfindung beispielsweise in Abhängigkeit einer Sampling-Rate abgebildet bzw. aufgelöst werden, d.h. in einem bestimmten Zeitintervall kann eine definierte, insbesondere einstellbare, Anzahl von Messungen durchgeführt werden.

Ausserdem kann der Ausgangsgrössenverlauf alleine durch eine in einem Zeitintervall gemessene Anzahl von Pulsen (definiert durch eine Abfolge von konstruktiver Interferenz und destruktiver Interferenz) mit einer jeweiligen Zeitinformation verkörpert sein, wobei diese Anzahl mit einer Anzahl auftretender Überschreitungen eines Schwellwerts korrespondieren kann. D.h. es kann hierfür z.B. fortlaufend ein die erfasste Interferometerausgangsgrösse repräsentierendes Signal erfasst werden, wobei zusätzlich ein Schwellwert für dieses Signal definiert ist und jede Überschreitung des Schwellwerts (und das nachfolgende Abfallen des Signalpegels unter den Schwellwert) als ein Puls gezählt wird. Durch die zusätzliche Zeitinformation kann daraus eine Abfolge von Pulsen in einem definierten Zeitintervall bestimmt und als Bewegungsparameter herangezogen werden.

Eine Relativbewegung in Richtung der Messstrahlung, d.h. insbesondere zwischen einem Ziel und einem Interferometer, insbesondere dem Lasertracker, ist im Zusammenhang mit vorliegender Erfindung generell als eine zumindest radiale Bewegung entlang einer optischen Achse, die durch die emittierte Messstrahlung definiert ist, zu verstehen, insbesondere da für eine interferometrisch messbare Relativbewegung eine Änderung einer Entfernung zwischen zwei Objekten (Ziel und Messgerät) erfolgen muss.

Im Hinblick auf die Bestimmung einer Distanzänderung zwischen zum Ziel können im Rahmen des Ermittelns der Entfernungsänderung aus eine Abfolge von konstruktiver Interferenz und destruktiver Interferenz, insbesondere Intensitätsmaxima und Intensitätsminima, Interferometerpulse identifiziert und fortlaufend gezählt werden, insbesondere wobei aus einer in einem definierten Zeitintervall bestimmten Anzahl von Interferometerpulsen die Entfernungsänderung zum Ziel bestimmt wird.

Aus der Anzahl der Pulse und der bekannten und dabei zu berücksichtigen Wellenlänge der Messstrahlung kann eine sehr präzise Bestimmung der Distanzänderung durchgeführt werden. Da die Änderung der gemessenen Distanz von der Anzahl der erfassten Pulse abhängt, werden im Rahmen des erfindungsgemässen (Überprüfungs-) Verfahrens diejenigen Messungen, bei welchen z.B. ein Puls nicht gezählt wurde bzw. "verloren gegangen" ist, als fehlerhaft identifiziert. Dies geschieht durch einen oben beschriebenen Vergleich von Bewegungsparameter und Bewegungskriterium, wobei bei einem Fehlen eines Pulses eine aus dem Ausgangsgrössenverlauf (in welchem der Puls ebenfalls fehlt und somit eine Bewegung bestimmt wird, die unmöglich erscheint) abgeleitete Relativbewegung abgelehnt wird.

Erfindungsgemäss kann in Abhängigkeit von dem Bereitstellen der Information ein Korrigieren der ermittelten Entfernungsänderung durchgeführt werden und/oder eine graphische oder akustische Ausgabe der Information erfolgen. Dabei ist im Rahmen des erfindungsgemässen Verfahrens eine Anpassung von durchgeführten Messungen realisierbar. Hierbei kann das Korrigieren derart erfolgen, dass ein nach dem Korrigieren ableitbarer Bewegungsparameter das Bewegungskriterium erfüllt, insbesondere wobei ein Anpassen des Ausgangsgrössenverlaufs derart erfolgt, dass der aus dem angepassten Ausgangsgrössenverlauf abgeleitete Bewegungsparameter das Bewegungskriterium erfüllt.

Damit können im Rahmen der Erfindung neben einem Messen der Entfernungsänderung auch ein erzeugtes Messergebnis überprüft und bei einem Feststellen einer fehlerhaften Messung aktiv eingegriffen werden und die Messparameter bzw. der Ausgangsgrössenverlauf verändert werden. Durch eine derartige Änderung kann der Bewegungsparameter so angepasst werden, dass bei einem Vergleich mit dem Bewegungskriterium ein Erfüllen des Kriteriums durch den Parameter festgestellt wird. Beispielsweise kann hierbei ein als fehlend identifizierter Interferenzzustand modelliert und eingefügt werden, sodass der daraus ableitbare Ausgangsgrössenverlauf eine durchführbare Bewegung des Ziels beschreibt. Insbesondere kann in diesem Zusammenhang z.B. mittels eines Kalman-Filters eine Pulssequenz (mehrere zusammenhängende Pulse) nachgebildet und in den Ausgangsgrössenverlauf eingefügt werden. Im Speziellen kann im Rahmen einer Berechnung einer derartigen Pulssequenz ein Filterverfahren mit Prädiktoren eingesetzt werden.

Insbesondere kann eine fehlerhafte Messung durch zumindest einen Puls (mehrere Pulse), welcher (fälschlicherweise) zuviel erfasst wurde, verursacht sein. In diesem Fall kann alternativ zum Einfügen eines zusätzlichen Pulses ein Eliminieren des fehlerhaft erfassten Pulses erfolgen, sodass der danach ableitbare korrigierte Ausgangsgrössenverlauf eine durchführbare Relativbewegung des Ziels beschreibt.

Hinsichtlich des Bewegungsparameters, welcher z.B. eine Grösse für die Relativbewegung in Richtung der Messstrahlung repräsentiert, kann im Rahmen des erfindungsgemässen Verfahrens dieser derart abgeleitet werden, dass aus dem (zeitaufgelöst ausgelesenen) Ausgangsgrössenverlauf eine aktuelle Relativgeschwindigkeit und/oder aktuelle Relativbeschleunigung des Ziels in Richtung der Messstrahlung als Bewegungsparameter abgeleitet wird.

Dadurch kann fortlaufend ein Parameter erzeugt werden, welcher eine vorliegende Geschwindigkeit oder Beschleunigung eines Messgeräts oder des Ziels - die jeweilige Geschwindigkeit oder Beschleunigung kann auch aus einer gleichzeitigen Bewegung des Ziels und des Messgeräts resultieren - auf Basis der an einem Detektor eines Interferometers detektierten Interferenzerscheinungen angibt. Der Bewegungsparameter kann insbesondere weitere bewegungsabbildende Grössen, wie z.B. die Richtung der Entfernungsänderung (positiv oder negativ), für das Ziel beschreiben.

Ferner kann zur Beschreibung der interferometrisch ableitbaren Zielbewegung erfindungsgemäss in Abhängigkeit von dem Ausgangsgrössenverlauf eine, insbesondere zeitaufgelöste, Intensitätskurve abgeleitet wird, insbesondere wobei aus einer Amplitude und/oder einer Frequenz der Intensitätskurve der Bewegungsparameter abgeleitet wird.

Beispielsweise kann ein Wert für die Amplitude oder die Frequenz der fortlaufend detektierten Intensitätsänderung als Parameter herangezogen werden und das Bewegungskriterium derart definiert sein, dass der Amplituden- oder Frequenzwert mit einem Amplituden- oder Frequenzschwellwert verglichen wird und in Abhängigkeit der Überschreitung dieser Schwelle die Information generiert wird. Ein solcher Schwellwert kann insbesondere in Abhängigkeit einer Sensitivität des Interferometerdetektors definiert sein. Ferner kann ein Signalpegel eines eingehenden Signals, insbesondere der Interferometerausgangsgrösse bzw. des Ausgangsgrössenverlaufs, fortlaufend detektiert werden und dieser Pegel als Bewegungsparameter herangezogen werden. Dabei kann in analoger Weise zu oben beschriebener Bewertung der Amplitude ein Vergleich mit einem vorgegebenen Signalpegel-Bewegungskriterium erfolgen.

Im Hinblick auf ein Rauschen und/oder Schwanken eines mit einem Interferometer erfassbaren Signals, wodurch detektierte Frequenzschwankungen verursacht sein können, kann im Speziellen eine Kumulation von Messwerten über ein definiertes Zeitintervall hinweg zur Mittelung der erfassten Signale erfolgen. Beispielsweise kann ein fortlaufender Durchschnittswert für die Frequenz (oder die Amplitude) bestimmt werden und dadurch die Robustheit des Systems gegenüber Signalrauschen und Signalschwankungen erhöht werden.

Insbesondere kann erfindungsgemäss der Bewegungsparameter als eine Frequenzänderung und/oder Amplitudenänderung aus der Intensitätskurve bestimmt werden.

Beispielsweise kann aus einer Frequenzänderung auf eine Geschwindigkeitsänderung der Relativbewegung geschlossen werden. Ausserdem verhält sich eine Frequenzänderung proportional zu einer Relativbeschleunigung, wodurch mit der Bestimmung der Frequenzänderung die relative Beschleunigung des Ziels bestimmbar ist und für das Ableiten des Bewegungsparameters berücksichtigt werden kann.

Hinsichtlich des Aspekts der Definition des Bewegungskriteriums kann im Rahmen der Erfindung ein Toleranzbereich für den Bewegungsparameter bestimmt werden und der Toleranzbereich als das Bewegungskriterium definiert werden, insbesondere wobei der Toleranzbereich durch zumindest einen Schwellwert definiert ist.

Damit lassen sich zu einzelnen zu überprüfenden Bewegungsparametern korrespondierende Toleranzen definieren, wobei in Abhängigkeit eines Vergleichs des bestimmten Parameters mit der jeweiligen Toleranz bzw. mit dafür definierten Schwellwerten eine Interferometermessung als plausibel (Bewegungsparameter innerhalb der Toleranzen) oder unwahrscheinlich bzw. unmöglich (Bewegungsparameter ausserhalb der Toleranzen) bewertet werden kann.

Ein weiterer Aspekt der Erfindung betrifft die Bestimmung des Bewegungskriteriums, wobei eine reale als maximal angenommene Relativgeschwindigkeit und/oder eine reale als maximal angenommene Relativbeschleunigung des Ziels in Richtung der Messstrahlung als Bewegungskriterium herangezogen wird, insbesondere wobei die reale Relativgeschwindigkeit und/oder die reale Relativbeschleunigung fortlaufend gemessen und fortlaufend als Bewegungskriterium gesetzt werden.

Mit einem derartigen Berücksichtigen maximaler (vorstellbarer bzw. annehmbarer) Geschwindigkeits- und/oder Beschleunigungswerte oder einer tatsächlichen Bewegung des Ziels kann fortlaufend ein Vergleich dieser angenommenen bzw. tatsächlich bestimmten Bewegung mit der interferometrisch aus dem Ausgangsgrössenverlauf abgeleiteten Bewegung stattfinden.

Im Speziellen kann das Bewegungskriterium erfindungsgemäss in Abhängigkeit eines Frequenzunterschiedes zwischen der Referenzstrahlung und der reflektierten Messstrahlung bestimmt werden. Hierdurch kann beispielsweise auf Grundlage des Dopplereffekts eine aktuelle (wirkliche) Geschwindigkeit und/oder Beschleunigung des Ziels bestimmt werden und diese mit einer aus dem Ausgangsgrössenverlauf abgeleiteten Bewegung verglichen werden.

Ein anderer Aspekt der Erfindung betrifft die Eigenschaften der zur Interferometrie verwendeten Laserstrahlung. Dabei kann erfindungsgemäss die Laserstrahlung longitudinal monomodig mit einer definierten Emissionswellenlänge und mit einer Kohärenzlänge von mindestens 10m mittels einer Laserdiode erzeugt werden.

Prinzipiell wird für interferometrische Anwendungen Laserstrahlung mit einer verhältnismässig grossen Kohärenzlänge benötigt bzw. bevorzugt, da die erreichbare Genauigkeit und Messreichweite des Messgeräts signifikant von dieser Kohärenzlänge abhängt. Typischerweise werden für heute bekannte Messverfahren, insbesondere hinsichtlich der Anwendung in Lasertrackern, Gaslaser, z.B. HeNe-Laser, als Strahlquellen zur Erzeugung einer derartigen Laserstrahlung mit grosser Kohärenzlänge eingesetzt. Eine solche Laserstrahlung, welche die erforderlichen Spezifikationen erfüllt, kann erfindungsgemäss auch durch eine spezifisch ausgebildete Laserdiode erzeugt werden.

Hinsichtlich der strukturellen Ausgestaltung im Rahmen des Verfahrens kann erfindungsgemäss ein Messgerät zur Ausführung des Verfahrens ausgebildet sein, wobei das Messgerät durch einen Lasertracker oder ein geodätisches Vermessungsgerät, wie z.B. eine Totalstation, verkörpert sein kann.

Im Rahmen der Erfindung kann demnach das Verfahren mit einem Messgerät mit Interferometereinheit ausgeführt werden, insbesondere wobei das Messgerät als Lasertracker zum fortlaufenden Verfolgen des Ziels und zum Positionsbestimmen des Ziels ausgebildet ist. Der Lasertracker weist dabei eine Strahlquelle zur Erzeugung von Laserstrahlung und einen Strahlteiler zur Aufteilung der Laserstrahlung in zumindest die Referenzstrahlung und die Messstrahlung und eine eine Stehachse definierende Basis auf. Ferner verfügt der Tracker über eine Strahllenkeinheit zur Emission der Messstrahlung und zum Empfang der am Ziel reflektierten Messstrahlung, wobei die Strahllenkeinheit um die Stehachse und eine im Wesentlichen orthogonal zur Stehachse stehende Neigungsachse relativ zur Basis motorisiert schwenkbar ist, eine Entfernungsmesseinheit zum Bestimmen einer Entfernungsänderung zum Ziel und eine Winkelmessfunktionalität zur Bestimmung einer Ausrichtung der Strahllenkeinheit relativ zur Basis.

Die Erfindung betrifft somit ausserdem ein Messgerät zur Bestimmung einer Entfernungsänderung zu einem reflektierenden Ziel mittels Interferometrie mit einer Aussendeeinheit zur Emission von Messstrahlung, einer Empfangseinheit zum Empfang von zumindest einem Teil der am Ziel reflektierten Messstrahlung und einer Überlagerungskomponente zur Erzeugung einer Überlagerung der reflektierten Messstrahlung mit einer Referenzstrahlung.

Zudem sind vorgesehen ein photosensitiver Detektor zur fortlaufenden Erfassung der Überlagerung und eine Auswerteeinheit zur Ableitung einer Interferometerausgangsgrösse basierend zumindest auf der erfassten Überlagerung, wobei die Interferometerausgangsgrösse von einer Entfernung zum Ziel abhängt, zur Erzeugung eines zeitaufgelösten Ausgangsgrössenverlaufs aus der abgeleiteten Interferometerausgangsgrösse und zur Ermittlung der Entfernungsänderung basierend auf dem Ausgangsgrössenverlauf.

Weiters ist die Auswerteeinheit ausgebildet zur dadurch erfolgenden fortlaufenden Überprüfung des Ausgangsgrössenverlaufs, dass basierend auf dem Ausgangsgrössenverlauf fortlaufend zumindest ein Bewegungsparameter für eine in Richtung der Messstrahlung ausführbare Relativbewegung des Ziels abgeleitet wird, ein fortlaufendes Vergleichen des Bewegungsparameters mit einem definierten Bewegungskriterium des Ziels erfolgt, wobei das Bewegungskriterium eine als real ausführbar, praktisch plausibel und empirisch angenommene Relativbewegung des Ziels in Richtung der Messstrahlung angibt, und bei einem Nicht-Erfüllen des Bewegungskriteriums eine Information bereitgestellt wird.

Erfindungsgemäss kann die Auswerteeinheit zur Ausführung eines oben beschriebenen erfindungsgemässen Verfahrens ausgebildet sein.

Das Messgerät kann zur Ausführung eines Pulsauslesens und zur Ausführung des erfindungsgemässen Verfahrens ein FPGA (Field-Programmable Gate Array) aufweisen, welches derart programmiert ist, dass eine Auswertung der von dem Interferometerdetektor erfassten Intensitäten erfolgen kann. Mittels einer digitalen Signalverarbeitung kann ein erfasstes Signal analysiert und weiterverarbeitet werden. Dadurch kann das fortlaufend erfasste Signal in einzeln zählbare Pulse übersetzt werden, sodass diese Pulse erfasst werden können.

Ausserdem kann das FPGA zur Erkennung von fehlenden Pulsen programmiert sein, wobei ein Vergleich von Bewegungsparametern mit Bewegungskriterien gemäss dem oben beschriebenen Verfahren erfolgt.

Insbesondere kann das FPGA derart programmiert sein, dass eine Signalverarbeitung zur Rekonstruktion eines erwarteten Signals, insbesondere des Ausgangsgrössenverlaufs, aus einem erfassten Signal ausführbar ist. Beispielsweise kann eine solche Rekonstruktion zur Identifikation eines Signalmusters erfolgen, wenn das empfangene Signal starkes Rauschen aufweist. Hierzu können Methoden der Signalverarbeitung, z.B. eine Fourier-Transformation oder spezifische Filtermethoden, programmiert sein.

Zudem kann durch das FPGA eine Anpassung einer überprüften Messung erfolgen, sodass beispielsweise ein zusätzlicher Interferometerpuls in einen detektierten Ausgangsgrössenverlauf modelliert wird oder ein Interferometerpuls eliminiert wird und eine korrigierte Messwertbestimmung unter Berücksichtigung dieses zusätzlichen Pulses erfolgt.

Im Speziellen kann das Messgerät als Lasertracker zur fortlaufenden Verfolgung des Ziels und zur Positionsbestimmung des Ziels ausgebildet sein, mit der als Strahlquelle ausgebildeten Aussendeeinheit zur Erzeugung von Laserstrahlung und einem Strahlteiler zur Aufteilung der Laserstrahlung in zumindest die Referenzstrahlung und die Messstrahlung und einer eine Stehachse definierenden Basis. Ausserdem weist der Lasertracker eine Strahllenkeinheit zur Emission der Messstrahlung und zum Empfang der am Ziel reflektierten Messstrahlung, wobei die Strahllenkeinheit um die Stehachse und eine im Wesentlichen orthogonal zur Stehachse stehende Neigungsachse relativ zur Basis motorisiert schwenkbar ist, eine Interferometereinheit zum Bestimmen der Entfernungsänderung zum Ziel und eine Winkelmessfunktionalität zur Bestimmung einer Ausrichtung der Strahllenkeinheit relativ zur Basis auf.

Hinsichtlich möglicher struktureller Ausführungsformen des erfindungsgemässen Messgeräts kann das als Lasertracker ausgebildete Gerät eine um die Stehachse relativ zur Basis motorisiert schwenkbare und die Neigungsachse bzw. eine horizontale oder liegende Achse definierende Stütze und eine als Strahllenkeinheit ausgebildete, um die Neigungsachse relativ zur Stütze motorisiert schwenkbare Anzieleinheit aufweisen, wobei die Anzieleinheit über eine Teleskopeinheit zur Emission der Messstrahlung und zum Empfang von zumindest einem Teil der am Ziel reflektierten Messstrahlung verfügt. In einer derartigen Ausführung kann ein Ausrichten der Messachse mittels eines Ausrichtens der Anzieleinheit erfolgen und die Zielsuchkamera sowie die Übersichtskamera (OVC = Over View Camera) können an der Anzieleinheit angeordnet sein.

Die Erfindung betrifft ausserdem ein Computerprogrammprodukt, das auf einem maschinenlesbaren Träger gespeichert ist, zur Ausführung der fortlaufenden Überprüfung durch Ableiten des Bewegungsparameters, durch Vergleichen des Bewegungsparameters mit dem Bewegungskriterium und durch Bereitstellen der Information, insbesondere zur Ausführung des Erzeugens des Ausgangsgrössenverlauf und des Ermittelns der Entfernungsänderung, des erfindungsgemässen Verfahrens, insbesondere wenn das Computerprogrammprodukt auf einer Auswerteeinheit eines erfindungsgemässen Messgeräts ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: zwei Ausführungsformen eines erfindungsgemässen Lasertrackers und ein Messhilfsinstrument;
- Fig.2a-b: das Funktionsprinzip für ein erfindungsgemässes Verfahren;
- Fig.3: eine Ausführungsform eines optischen Aufbaus für ein erfindungsgemässes Messgerät mit Funktionalität zur Überprüfung von Messungen von Entfernungsänderungen mit einem Interferometer;
- Fig.4: einen prinzipiellen Aufbau einer Interferometeranordnung für ein Messgerät mit erfindungsgemässer Überprüfungsfunktionalität; und
- Fig.5: eine weitere Ausführungsform eines Lasertrackers mit erfindungsgemässer Überprüfungsfunktionalität.

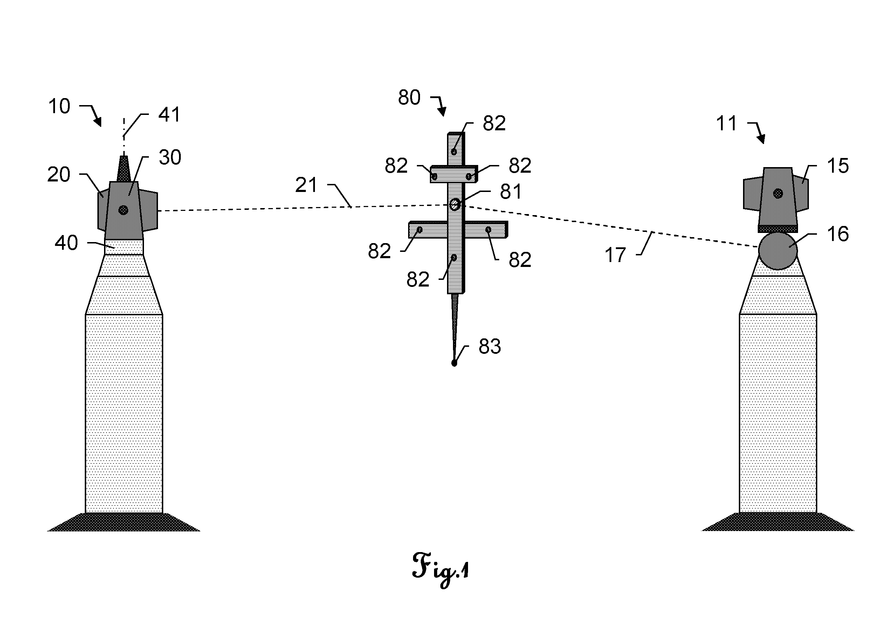

Figur 1 zeigt zwei Ausführungsformen für erfindungsgemässe Lasertracker 10,11 und ein Messhilfsinstrument 80, z.B. ein taktiles Messgerät. Der erste Lasertracker 10 weist eine Basis 40 und eine Stütze 30 auf, wobei die Stütze 30 um eine durch die Basis 40 definierte Schwenkachse 41 relativ zur Basis 40 schwenkbar bzw. rotierbar angeordnet ist. Zudem ist eine Anzieleinheit 20 derart an der Stütze 30 angeordnet, dass die Anzieleinheit 20 relativ zur Stütze 30 um eine Neigungsachse (Transitachse) schwenkbar ist. Durch eine so um zwei Achsen bereitgestellte Ausrichtungsmöglichkeit der Anzieleinheit 20 kann ein von dieser Einheit 20 emittierter Laserstrahl 21 exakt ausgerichtet und damit Ziele angezielt werden. Dieses Ausrichten kann mittels einer Motorisierung automatisch erfolgen. Die Schwenkachse 41 und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Messlaserstrahl 21 auf einen Reflektor 81 (Retroreflektor) am Messhilfsinstrument 80 gerichtet und wird an diesem zurück zum Lasertracker 10 retro-reflektiert. Mittels dieses Messlaserstrahls 21 kann eine Entfernung zum Reflektor 81, insbesondere mittels Laufzeitmessung, mittels des Phasenmessprinzips oder mittels des Fizeau-Prinzips, bestimmt werden. Der Lasertracker 10 verfügt hierzu über eine Entfernungsmesseinheit (mit Interferometer und Absolutdistanzmesser) zur Bestimmung dieser Entfernung zwischen dem Tracker 10 und dem Reflektor 81 und über Winkelmesser, die eine Stellung der Anzieleinheit 20, mittels derer der Laserstrahl 21 definiert ausgerichtet und geführt werden kann, und somit eine Ausbreitungsrichtung des Laserstrahls 21 bestimmbar machen.

Ausserdem weist der Lasertracker 10, insbesondere die Anzieleinheit 20, eine Bilderfassungseinheit zum Zweck einer Positionsbestimmung einer Sensorbelichtung auf einem Sensor bzw. in einem erfassten Bild einen CMOS auf oder ist insbesondere als CCD- oder Pixelsensorarray-Kamera ausgebildet. Derartige Sensoren erlauben eine positionssensitive Detektion von erfasster Belichtung auf dem Detektor. Weiters weist das Messhilfsinstrument 80 einen taktilen Sensor auf, dessen Kontaktpunkt 83 mit einem zu vermessenden Zielobjekt in Kontakt gebracht werden kann. Während dieser Kontakt zwischen dem Tastwerkzeug 80 und dem Zielobjekt besteht können eine Position des Kontaktpunktes 83 im Raum und damit die Koordinaten eines Punkts am Zielobjekt exakt bestimmt werden. Dieses Bestimmen erfolgt vermittels einer definierten relativen Positionierung des Kontaktpunkts 83 zum Reflektor 81 und zu am Messhilfsinstrument 80 angeordneten Orientierungsmarkierungen 82, die beispielsweise als Leuchtdioden ausgebildet sein können. Alternativ können die Orientierungsmarkierungen 82 auch derart ausgebildet sein, dass diese bei einem Beleuchten, z.B. mit Strahlung einer definierten Wellenlänge, die auftreffende Strahlung reflektieren (z.B. als Retroreflektoren ausgebildete Orientierungsmarkierungen 82), insbesondere eine bestimmte Leuchtcharakteristik zeigen, oder dass diese ein definiertes Muster oder Farbkodierung aufweisen. Aus der Lage bzw. Verteilung der Orientierungsmarkierungen 82 in einem mit dem Sensor der Bilderfassungseinheit erfassten Bild kann somit eine Orientierung des Tastwerkzeugs 80 bestimmt werden.

Der zweite Lasertracker 11 weist eine von der Bilderfassungseinheit 15 separierte Strahlführungseinheit 16 zur Emission eines zweiten Laserstrahls 17 auf, welcher ebenfalls auf den Reflektor 81 ausgerichtet ist. Sowohl der Laserstrahl 17 als auch die Bilderfassungseinheit 15 sind jeweils um zwei Achsen motorisiert schwenkbar und können dadurch derart ausgerichtet werden, dass mittels der Bilderfassungseinheit 15 das mit dem Laserstrahl 17 angezielte Ziel 81 und die Orientierungsmarkierungen 82 des Messhilfsinstruments 80 erfasst werden können. Somit können auch hier eine präzise Entfernung zum Reflektor 81 und eine Orientierung des Instruments 80 anhand der räumlichen Lage der Orientierungsmarkierungen 82 bestimmt werden.

Zur jeweiligen Ausrichtung der Laserstrahlen 17,21 auf den Reflektor 81 sind an den Lasertrackern 10,11 jeweils Beleuchtungsmittel zur Beleuchtung des Reflektors 81 mit Strahlung einer bestimmten Wellenlänge, insbesondere im infraroten Wellenlängenbereich, vorgesehen und zusätzliche zumindest eine Zielsuchkamera mit einem positionssensitiven Detektor, eine so genannte ATR-Kamera (automatic target recognition), an jedem Tracker 10,11 angeordnet. Die an dem Reflektor 81 reflektierte und zum Lasertracker 10,11 rückgestrahlte Beleuchtungsstrahlung kann jeweils mittels der Kamera detektiert und mit den positionssensitiven Detektoren kann eine Position des Reflektors 81 auf dem jeweiligen Detektor abgebildet werden. Somit kann sowohl mit dem ersten Lasertracker 10 als auch mit dem zweiten Lasertracker 11 eine abgebildete Position des Reflektors bestimmt und in Abhängigkeit dieser detektierten Suchbildpositionen das Ziel (Reflektor 81) im Bild aufgefunden und die Anzieleinheit 20 bzw. die Strahlführungseinheit 16 derart ausgerichtet werden, dass das Ziel mit dem Messstrahl 17,21 automatisch angezielt wird bzw. der Laserstrahl 17,21 dem Ziel 81 automatisch (iterativ) angenähert wird. Für eine robuste Detektion der Reflexe können insbesondere Filter in der Zielsuchkamera verbaut sein (z.B. wellenlängenabhängige Filter), welche z.B. nur das von den Beleuchtungsmitteln emittierte Licht transmittieren, und/oder Schwellwerte für einen Vergleich der erfassten Signale mit Signalsollwerten im Lasertracker hinterlegt sein.

Die Lasertracker 10,11 können alternativ jeweils zumindest zwei Kameras mit jeweils einem positionssensitiven Detektor aufweisen, wobei für jeden Tracker 10,11 aus den jeweils zwei erfassten Suchbildpositionen für den Reflektor 81 jeweils beispielsweise eine Grobposition des Reflektors 81 bestimmt werden kann, z.B. nach allgemein bekannten Prinzipien der Photogrammetrie. Ein solches System zum Auffinden von Zielen ist beispielsweise in der europäischen Patentanmeldung Nr. 11192216.7 beschrieben.

Zudem weisen die erfindungsgemässen Lasertracker 10,11 jeweils eine Übersichtskamera auf, deren Sichtfeld - im Vergleich zu den Sichtfeldern der Zielsuchkameras mit positionssensitiven Detektoren - grösser ist und somit einen grösserer Bereich erfassbar macht. Mit diesen Übersichtskameras können Bilder von Objekten und Zielen im visuellen Lichtspektrum erfasst werden, wobei diese Bilder mittels einer Anzeigeeinheit an den Lasertrackern und/oder auf einem Display, welches an einer jeweiligen Steuerungseinheit zur Steuerung des jeweiligen Lasertrackers 10,11 angeordnet ist, ausgegeben werden können. Im Speziellen können mit der Übersichtskamera Farbbilder erfasst werden.

Die Beleuchtungsmittel, die Zielsuchkameras und/oder die Übersichtskamera können in diesem Zusammenhang z.B. an der Bilderfassungseinheit 15, der Strahlführungseinheit 16, der Anzieleinheit 20, der Stütze 30 und/oder der Basis 40 in jeweils definierten Positionen angeordnet sein.

Die Entfernungsmesseinheit des jeweiligen Lasertrackers 10,11 stellt eine Entfernungsinformation zum Ziel 81 auf Basis einer Bestimmung einer relativen oder absoluten Distanz zwischen dem jeweiligen Tracker 10,11 und dem Ziel 81 und einer Bestimmung einer Änderung dieser Distanz bereit. Wird dabei die absolute Distanz insbesondere mittels Laufzeitmessung, mittels des Phasenmessprinzips oder mittels des Fizeau-Prinzips bestimmt, so wird zur Bestimmung der Distanzänderung eine Messung mit einem der jeweiligen Entfernungsmesseinheit zugeordneten Interferometer durchgeführt. Hierzu ist an jedem der Lasertracker 10,11 eine Strahlquelle zur Erzeugung einer Laserstrahlung vorgesehen, wobei die erzeugte Strahlung zumindest in eine Referenzstrahlung und eine Messstrahlung 17,21 aufgeteilt wird. Die Referenzstrahlung wird entlang eines bekannten Referenzpfades (Länge des Pfades ist bekannt) zu einem Interferometerdetektor geführt. In einer alternativen Ausführungsform kann die Länge des Referenzpfades zumindest konstant sein, wobei die Länge des Pfades nicht bekannt sein muss. In Abhängigkeit der Anordnung und Ausgestaltung der optischen Komponenten (z.B. Detektor) kann die Länge des Referenzpfades insbesondere "Null" sein. Die Messstrahlung 17,21 hingegen wird derart aus dem Tracker 10,11 ausgesendet, dass diese auf das Ziel 81 trifft und an diesem rückreflektiert wird. Der reflektierte Strahl bzw. Teile des reflektierten Strahls werden dann wiederum seitens des Trackers 10,11 erfasst und entlang eines Messpfades ebenfalls zum Interferometerdetektor geführt, wo die Referenzstrahlung mit der empfangenen Messstrahlung 17,21 überlagert wird. Durch diese Überlagerung entsteht eine Interferenz aus den beiden Strahlungen, welche am Detektor erfasst und aufgelöst werden kann.

Im Rahmen dieser Interferenz werden Maxima (konstruktive Interferenz) und Minima (destruktive Interferenz) an Strahlungsintensität erzeugt. Die Intensität ist dabei abhängig von einem Strahlengangunterschied zwischen den beiden auf dem Detektor auftreffenden Strahlen. Da der Referenzpfad und damit die Distanz, die von der Referenzstrahlung zum Detektor zurückgelegt wird, konstant gehalten werden kann, ist der Gangunterschied im Wesentlichen von der Entfernung zwischen dem jeweiligen Lasertracker 10,11 und dem Ziel 81 abhängig. Wird demnach die Entfernung zwischen dem Tracker 10,11 und dem Ziel 81 verändert, so verändert sich auch der Gangunterschied und damit während der Entfernungsveränderung auch die Intensität eines detektierten Interferenzzustands als Interferometerausgangsgrösse (Interferenzmusters).

Während einer solchen Relativbewegung (wobei die Entfernung verändert wird) zwischen zumindest einem der Lasertracker 10,11 und dem Ziel 81 können am Interferometerdetektor abwechselnd hohe und niedrige Intensitäten festgestellt werden. Unter Berücksichtigung der Wellenlänge der Messstrahlung 17,21 (und der Referenzstrahlung) kann aus einer fortlaufenden Detektion des Interferenzzustands als Interferometerausgangsgrösse eine relative Distanz, d.h. eine Änderung der Distanz, zum Ziel 81 berechnet werden. Dabei werden insbesondere fortlaufend die detektierten Intensitätsmaxima und/oder Intensitätsminima (als Interferometerpulse) gezählt.

Erfindungsgemäss verfügt sowohl der Lasertracker 10 als auch der Lasertracker 11 über eine Überprüfungsfunktionalität, wobei bei deren Ausführung der vom Detektor erfasste Interferenzverlauf als Ausgangsgrössenverlauf bzw. Intensitätsmuster fortlaufend ausgelesen und weiterverarbeitet wird. Dabei wird aus dem erfassten und als Ausgangsgrössenverlauf ausgelesenen Interferenzverlauf ein Bewegungsparameter für eine radial entlang der Messstrahlung erfolgende Relativbewegung zwischen dem Lasertracker und dem Ziel abgeleitet. Dieser Parameter kann somit eine rechnerisch aus dem Interferometersignal bestimmte Relativbewegung zwischen Ziel 81 und Tracker 10,11, d.h. eine Entfernungsänderung zwischen Ziel 81 und Tracker 10,11, repräsentieren. Beispielsweise kann der Bewegungsparameter eine aus dem Signal bestimmte aktuelle Beschleunigung oder Geschwindigkeit des Ziels 81 bzw. des jeweiligen Trackers 10,11 angeben.

Im Rahmen der Überprüfungsfunktionalität folgt auf das Bestimmen des jeweiligen Bewegungsparameters ein Vergleichen des Parameters mit einem Bewegungskriterium. Das Bewegungskriterium gibt in diesem Zusammenhang eine real ausführbare Relativbewegung zwischen dem Lasertracker und dem Ziel an, d.h. durch das jeweilige Bewegungskriterium sind Relativbewegungen zwischen Tracker 10,11 und Ziel 81 beschrieben, die tatsächlich auftreten können. Beispielsweise kann das Kriterium Beschleunigungswerte für das Ziel 81 oder den Tracker 10,11 bereitstellen, welche bei einer z.B. durch einen Benutzer oder eine spezifizierte Maschine ausführbaren Bewegung (des Ziels oder Trackers) real auftreten können.

Wird beispielsweise als Bewegungsparameter eine aktuelle Beschleunigung, d.h. ein aktuell vorliegender Wert für die Beschleunigung des Ziels 81 oder des Trackers 10,11, in Abhängigkeit von dem Interferenzverlauf als Ausgangsgrössenverlauf bestimmt, kann dieser Wert mit einem entsprechenden Bewegungskriterium, welches beispielsweise eine Obergrenze für zulässige Beschleunigungen aufweist, verglichen werden.

In Abhängigkeit des Vergleichs des Bewegungsparameters mit dem Bewegungskriterium wird in Folge eine Information ausgegeben, welche Auskunft über z.B. die Plausibilität oder mögliche Ausführung der mittels des Interferometersignals abgeleiteten radialen Relativbewegung gibt. Wird z.B. die Obergrenze für die Beschleunigung durch den bestimmten Bewegungsparameter überschritten, so gilt der Messwert als nicht annehmbar. Die Information kann z.B. mittels eines Displays am Tracker, auf einem Computermonitor oder durch einen mobilen Datenlogger graphisch oder akustisch bereitgestellt werden.

Wird ein Bewegungsparameter durch den Vergleich mit einem entsprechenden Bewegungskriterium als nicht plausibel klassifiziert, so ist dies ein klarer Hinweise darauf, dass während der Messung mit dem Interferometer ein Fehler aufgetreten ist. Dies kann beispielsweise dann der Fall sein, wenn ein oder mehrere Interferenzmaxima nicht oder fehlerhaft erfasst werden oder das Auslesen der erfassten Maxima fehlerbehaftet ist. Somit gibt die Information Auskunft über die Richtigkeit der durchgeführten Messung bzw. kann in Abhängigkeit des Vergleichs des Bewegungsparameters mit dem Bewegungskriterium eine mögliche Abweichung des berechneten Messwertes von einem möglichen Bewegungswert oder von einem auf Basis des Ausgangsgrössenverlaufs geschätzten bzw. antizipierten Bewegungswert angeben.

Insbesondere wird die Überprüfungsfunktionalität automatisch während eines mittels des Interferometers durchgeführten Messvorgangs ausgeführt.

Zudem kann im Rahmen des Überprüfens eine aktive Korrektur der Messwerte vorgenommen werden. So kann beispielsweise eine Messung, bei welcher eine Entfernungsänderung bei fehlenden Interferenzpulsen bestimmt wurde so korrigiert werden, dass die fehlenden Pulse modelliert und für eine erneute Bestimmung berücksichtigt werden. Andererseits kann in diesem Zusammenhang eine Elimination von fehlerhaft zusätzlich erfassten Pulsen erfolgen.

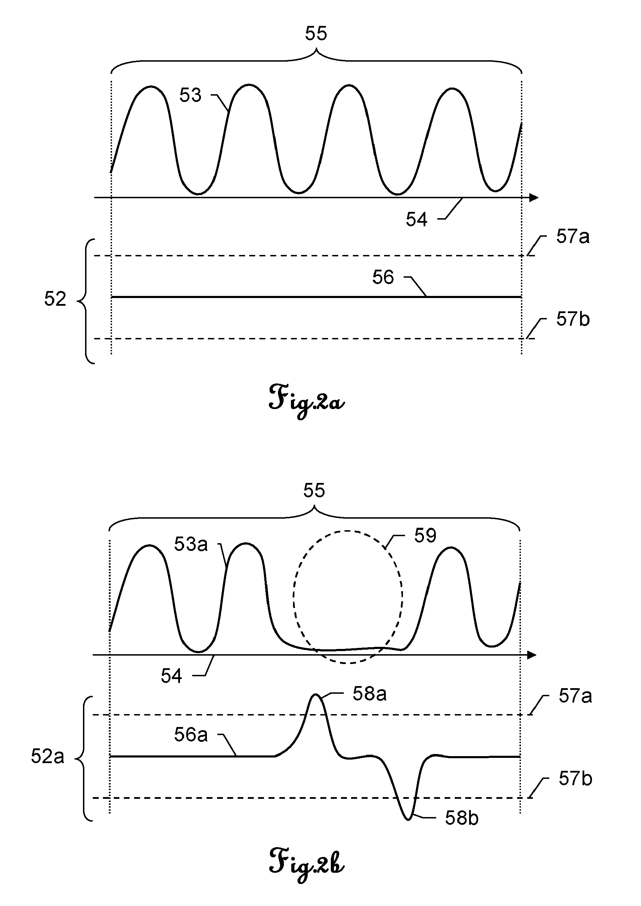

Die Figuren 2a und 2b zeigen das Funktionsprinzip eines erfindungsgemässen Verfahrens (Überprüfungsverfahren) anhand jeweils eines von einem Detektor eines Interferometers erfassten und ausgelesenen Intensitätskurve 53,53a und jeweils einer daraus fortlaufend abgeleiteten Plausibilitätsprüfung 52,52a.

Figur 2a zeigt eine mittels eines Detektors fortlaufend erfasste Intensität von auf den Detektor auftreffender Strahlung, wobei die Intensität zeitlich aufgelöst erfasst und mit einer einen Ausgangsgrössenverlaufdarstellenden Intensitätskurve 53 dargestellt ist, d.h. jeweilige gemessene Intensitäten sind jeweiligen Messzeitpunkten zugeordnet, wobei die Intensitäten über eine Zeitachse 54 aufgetragen dargestellt sind. Aus der Anzahl der in dem gezeigten Zeitintervall 55 erfassten Intensitätsmaxima kann bei Kenntnis der Wellenlänge der Messstrahlung eine während des Zeitintervalls 55 erfolgte Entfernungsänderung abgeleitet werden, insbesondere in radialer Richtung zur Messstrahlung. Ein hier als Ausgangsgrössenverlauf dargestellter Interferenzverlauf repräsentiert eine im Wesentlichen gleichförmige, lineare radiale Relativbewegung zwischen einem Ziel und dem Detektor des Interferometers, insbesondere eine gleichförmige Bewegung des Ziels relativ zu einem mit dem Interferometer ausgerüsteten Lasertracker. Aus der gezeigten Abfolge von grossen und niedrigen Intensitäten und deren zeitlich homogener Abfolge (gleich bleibende Frequenz der Kurve 53) kann auf eine gleichmässige Abnahme bzw. Zunahme der Distanz zwischen dem Tracker und dem mit der Messstrahlung angezielten Ziel geschlossen werden.

Zur Überprüfung der Richtigkeit bzw. möglicher Fehler der Messung der Entfernungsänderung wird aus der Intensitätskurve 53 eine über das Zeitintervall 55 zeitaufgelöste Überprüfungskurve 56 abgeleitet. Die Überprüfungskurve 56 repräsentiert hierbei den zeitlichen Verlauf der aus dem Interferenzverlauf (Ausgangsgrössenverlauf) abgeleiteten Bewegungsparameter für die Relativbewegung, d.h. die Überprüfungskurve 56 entspricht den über die Zeit aufgetragenen Bewegungsparametern. Das Ableiten von der Intensitätskurve 53 zeitlich zugeordneten Bewegungsparametern erfolgt hierfür fortlaufend. Die Überprüfungskurve 56 ist im gezeigten Beispiel eine Kurve mit einer Steigung von "Null", d.h. die Kurve 56 zeigt z.B. an, dass die detektierte Relativbewegung während des Zeitintervalls 55 mit einer konstanten Geschwindigkeit bzw. unbeschleunigt erfolgt. Ferner kann aus der Frequenz der Intensitätskurve 53 die Relativgeschwindigkeit für die Bewegung bestimmt werden.

Zur Überprüfung ob es sich bei den bestimmten Bewegungsparametern, aus welchen die Überprüfungskurve 56 abgeleitet ist, jeweils um plausibel, möglich und praktisch annehmbare Werte handelt, d.h. als für eine reale Relativbewegung in Frage kommende Werte, ist zudem ein heranziehbares Bewegungskriterium - hier eine Obergrenze 57a und eine Untergrenze 57b - für den aufgetragenen Bewegungsparameter definiert. Aus einem Vergleich des Verlaufs der Kurve 56 bzw. der Bewegungsparameter mit den jeweiligen definierten Grenzen 57a,57b kann die detektierte Bewegung auf ihre Vertrauenswürdigkeit überprüft werden. Da die Kurve 56 durchweg innerhalb der Grenzen 57a,57b verläuft, wird die durch den Intensitätsverlauf 53 repräsentierte Messung der Entfernungsänderung als richtig bewertet. Die daraus rechnerisch bestimmbare Relativbewegung entspricht damit einer real möglichen Relativbewegung.

Auch Figur 2b zeigt eine mittels des Interferometerdetektors fortlaufend erfasste Intensität von auf den Detektor auftreffender Strahlung, wobei die Intensität zeitlich aufgelöst erfasst und in einer Intensitätskurve 53a dargestellt ist.

Im Unterschied zu Figur 2a zeigt die Intensitätskurve 53a keine gleich bleibende Frequenz hinsichtlich der Abfolge von Intensitätsmaxima und -minima. Bei der Detektion von nur den ersten beiden zueinander verhältnismässig homogenen Intensitätspeaks kann eine gleich bleibende radiale Relativbewegung abgeleitet werden. Jedoch folgt im Anschluss an diese beiden ersten Peaks ein Bereich 59 in welchem ein weiterer Peak zu vermuten wäre bzw. bei einer weiter gleichförmigen Relativbewegung detektiert werden müsste. Würde nun eine Messung von Entfernungsänderungen allein auf Basis der zählbaren Interferometerpulse (Intensitätsmaxima) erfolgen, so würde die daraus bestimmte Entfernungsänderung fehlerbehaftet sein.

Durch Ausführung der Überprüfungsfunktionalität wird im Rahmen der Plausibilitätsprüfung 52a jedoch auch zur Intensitätskurve 53a eine Überprüfungskurve 56a abgeleitet. Der Interferenzverlauf als Ausgangsgrössenverlauf wird in diesem Zusammenhang hinsichtlich eines relativen Bewegungsmusters analysiert, wodurch sich im Verlauf der Überprüfungskurve 56a zwei Peaks 58a und 58b ergeben. Da die Überprüfungskurve 56a wiederum einen aus der Intensitätskurve 53a fortlaufend abgeleiteten Bewegungsparameter repräsentiert, zeigen die Peaks 58a,58b jeweils eine abrupte und starke Veränderung des Parameterwertes an.

Da im gezeigten Beispiel eine Relativbeschleunigung als Bewegungsparameter herangezogen wird, wird durch den Peak 58a ein verhältnismässig grosse, positive Beschleunigung und durch den Peak 58b eine ebenfalls verhältnismässig grosse, jedoch negative Beschleunigung (Abbremsen) angezeigt. Die Spitzen der Peaks 58a,58b überschreiten dabei deutlich die für den Beschleunigungsparameter definierten Grenzen 57a,57b. Im Rahmen eines Vergleichs des fortlaufend abgeleiteten Bewegungsparameters (Beschleunigungswert) mit dem durch die Grenzen 57a,57b repräsentierten Bewegungskriterium wird die Plausibilität der aus der Intensitätskurve 53a ableitbaren möglichen Bewegung des Ziels und/oder des Trackers somit abgelehnt. Ein derartig starkes Beschleunigen und anschliessend starkes Abbremsen des Ziel und/oder des Trackers ist, insbesondere innerhalb des Zeitintervalls 55, hinsichtlich einer wirklichen z.B. mit dem Ziel ausführbaren Bewegung nicht möglich. Eine solche Bewegung würde dem physikalischen Grundsatz der Massenträgheit widersprechen.

Mit dem Vergleich des Bewegungsparameters mit dem Bewegungskriterium kann weiters eine Anzahl an Pulsen (Peaks) festgestellt werden, welche während des fortlaufenden Erfassens der Interferometerausgangsgrösse nicht erkannt bzw. gezählt wurden. Dieses Feststellen kann insbesondere mittels einer Analyse der abgeleiteten Überprüfungskurve 56a erfolgen. Auf dieser Basis kann die entsprechende Anzahl fehlender Pulse in die Intensitätskurve 53a eingefügt werden und eine erneute Bestimmung der Entfernungsänderung in Abhängigkeit dieser so modifizierten Kurve durchgeführt werden. Als Ergebnis wird dann ein korrigierter Wert für die Entfernungsänderung bestimmt und bereitgestellt. Insbesondere kann die Bereitstellung dieses angepassten Wertes zusammen mit einer die Anpassung kennzeichnenden Information erfolgen. Im Speziellen kann eine zusammenhängende Pulssequenz in die Intensitätskurve 53a eingefügt werden, wobei die einzufügende Sequenz mittels einer Auswertung mit einem Kalman-Filter bestimmt werden kann.

Insbesondere erfolgt eine Anpassung der Intensitätskurve 53a derart, dass ein aus dem Verlauf 53a ableitbarer Bewegungsparameter bzw. eine daraus ableitbare Überprüfungskurve 56a das Bewegungskriterium erfüllt bzw. die neue Überprüfungskurve innerhalb der bestehenden Grenzen 57a,57b verläuft.

Im gezeigten Beispiel gemäss Figur 2b kann im Rahmen der Anpassung ein einzelner zusätzlicher Peak im Bereich 59 eingefügt werden (vgl. Intensitätskurve 53 gemäss Figur 2a) und eine Bestimmung einer Distanzänderung dann unter Berücksichtigung des zusätzlichen Peaks erfolgen, sodass die ermittelte Distanzänderung einem korrekten Messwert entspricht.

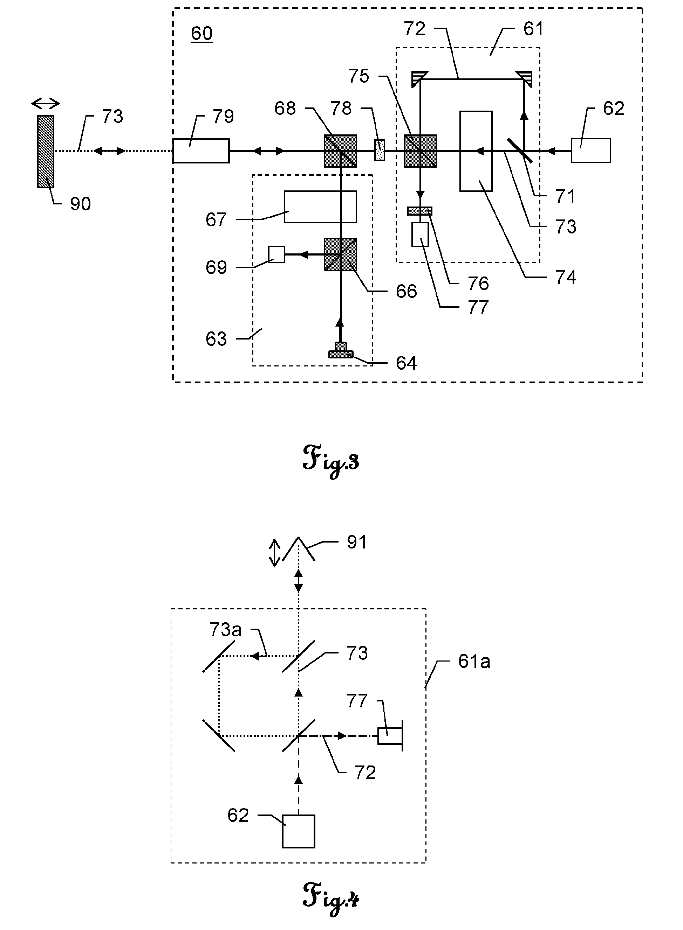

Figur 3 zeigt eine Ausführungsform eines optischen Aufbaus 60 für ein erfindungsgemässes Messgerät, insbesondere Lasertracker, mit einer erfindungsgemässen Funktionalität zur Überprüfung von Messungen von Entfernungsänderungen, welche mit einem Interferometer 61 ausgeführt werden. Ausserdem weist der Aufbau 60 eine Strahlquelle 62, z.B. eine HeNe-Laserstrahlquelle oder eine Laserdiode, und einen Absolutdistanzmesser 63 (ADM) mit einer weiteren Strahlquelle 64, z.B. einer Laserdiode oder einer SLED (Superluminescent LED), auf.

Der von der Strahlquelle 64 des Absolutdistanzmessers 63 ausgehende Lichtstrahl wird auf einen polarisierenden Strahlteiler 66 und von dort durch einen elektrooptischen Modulator 67 zu einem wellenlängenabhängigen Strahlteiler 68 geführt. Ein derartiger Strahlteiler 68 mit wellenlängenabhängiger Strahlteilung wird insbesondere bei unterschiedlichen Emissionswellenlängen der beiden Lichtquellen 62,64 eingesetzt. Das rückkehrende Licht wird im Absolutdistanzmesser 63 durch den polarisierenden Strahlteiler 66 auf einen ADM-Detektor 69 geführt. Insbesondere sind in diesem Zusammenhang auch andere ADM-Anordnungen und Verfahren verwendbar, bei denen sich der Messlichtstrahl durch beispielsweise den wellenlängenabhängigen Strahlteiler 68 ein- und auskoppeln lässt. Ein Beispiel für einen solchen Distanzmesser ist in der WO 03/062744 Al geoffenbart. Grundsätzlich sind hier wie in den anderen Ausführungsformen der Erfindung auch andere Typen von ADM, wie z.B. Phasenmesser, einsetzbar.

Das Interferometer 61 verwendet erfindungsgemäss Licht, welches von der Strahlquelle 62 erzeugt wird. In der gezeigten Ausführungsform ist diese Quelle 62 direkt dem Aufbau 60 zugeordnet, wobei diese eine longitudinal monomodige Laserstrahlung mit grosser Kohärenzlänge (single frequency)erzeugt. In einer alternativen Ausführung kann die Strahlquelle 62 einer anderen Komponente des Messgeräts zugeordnet sein, wobei die Strahlung mittels eines Lichtleiters in das Interferometer 61 eingekoppelt wird. Die erzeugte Laserstrahlung wird durch einen Strahlteiler 71 in eine Referenzstrahlung 72 auf einem Referenzlichtpfad und in eine Messstrahlung 73 auf einem Messlichtpfad aufgeteilt. Der Messlichtpfad führt durch einen akustooptischen Modulator 74 und trifft zusammen mit dem Referenzlichtpfad auf einen polarisierenden Strahlteiler 75. Der polarisierende Strahlteiler 75 leitet die Messstrahlung weiter zum wellenlängenabhängigen Strahlteiler 68, und lenkt das rückkehrende Messlicht zusammen mit dem Referenzlicht über ein Polarisationsfilter 76 zu einem Interferometerdetektor 77. Die Wirkungsweise eines solchen Interferometers 61 ist grundsätzlich bekannt und basiert auf dem Welleninterferenzprinzip. Es sind insbesondere auch andere Interferometeranordnungen und Verfahren verwendbar, bei denen sich die Messstrahlung durch beispielsweise den wellenlängenabhängigen Strahlteiler 68 ein- und auskoppeln lässt. Ein Beispiel für ein solches Interferometer ist in der WO 03/062744 Al beschrieben. Grundsätzlich sind in anderen Ausführungsformen der Erfindung auch andere Typen von Interferometern (z.B. Michelson mit Quadraturdetektion) einsetzbar.

Am Interferometerdetektor 77 wird eine Überlagerung der Referenzstrahlung 72 mit der an einem beweglichen Ziel 90 reflektierten und auf den Interferometerdetektor 77 geführten Messstrahlung 73 detektiert. Dabei kann die Intensität der bei der Überlagerung der beiden Strahlungen 72,73 entstehenden Interferenz fortlaufend (als Interferometerausgangsgrösse) erfasst werden. Das Ableiten der Interferometerausgangsgrösse basiert hierbei zumindest auf der erfassten Überlagerung, wobei die Interferometerausgangsgrösse von einer Entfernung zum Ziel abhängt.

Befindet sich das Ziel 90 in einer konstanten Entfernung zum optischen Aufbau 60 bzw. zum Interferometerdetektor 77, so ist der während der beibehaltenen festen Entfernung zum Ziel 90 gemessene Intensitätswert konstant. Mit einer bezüglich einer durch die Messstrahlung 73 definierten optischen Achse relative Bewegung des Ziels 90 zum optischen Aufbau 60 (bzw. mit einer Bewegung des Aufbaus 60) verändert sich die Entfernung zwischen den beiden Komponenten 90,60, damit ein Gangunterschied zwischen der Referenzstrahlung 72 und der Messstrahlung 73 und dadurch die am Interferometerdetektor 77 messbare Intensität in Abhängigkeit der Entfernungsänderung. Mittels des Interferometerdetektor 77 können diese Intensitätsvariationen, insbesondere zeitaufgelöst, gemessen und erfasst (als Ausgangsgrössenverlauf) und für die Überprüfung der Richtigkeit einer solchen Entfernungsänderungsmessung ausgelesen und weiterverarbeitet werden. Das Erzeugen des zeitaufgelösten Ausgangsgrössenverlaufs erfolgt aus der abgeleiteten Interferometerausgangsgrösse, wobei ein Ermitteln der Entfernungsänderung basierend auf dem Ausgangsgrössenverlauf erfolgt.

Zur Überprüfung der Richtigkeit einer solchen Messung wird - gemäss der in Zusammenhang mit den Figuren 1-2b beschriebenen Vorgehensweise - ein Bewegungsparameter aus den mit dem Interferometerdetektor 77 erfassten Intensitäten fortlaufend abgeleitet und dieser Parameter fortlaufend mit einem Bewegungskriterium verglichen. In Abhängigkeit des Vergleichs wird dann eine Information hinsichtlich der Verlässlichkeit der durchgeführten Messung ausgegeben.

Der optische Aufbau 60 weist weiter eine λ/4-Platte 78 und eine Komponente 79 auf, welche Licht, das entlang einer vom Absolutdistanzmesser 63 und dem Interferometer 61 gemeinsamen genutzten optischen Achse von aussen in den Aufbau 60 einfallt, auftrennen und einen ersten Teil dieses Lichtes zu einer Übersichtskamera (nicht dargestellt) und einen zweiten zu einem Positionswandler (nicht dargestellt) ausgekoppelt. Die Übersichtskamera kann eine eigene Optik und zusätzlich einen Bildwandler aufweisen. Die Übersichtskamera weist dabei typischerweise einen Öffnungswinkel von rund 10° und eine Brennweite von beispielsweise 30 - 50mm auf und dient zur Groblokalisierung von Messzielen.

Zur Erfassung von reflektierenden Zielen kann der Aufbau 60 zudem vorzugsweise eine Reflektorbeleuchtung mit einer bestimmten Beleuchtungswellenlänge aufweisen, welche einen Winkelbereich beleuchtet, der vorzugsweise mindestens so gross ist, wie der Öffnungswinkel der Übersichtskamera.

Eine Auswertungselektronik und/oder Auswertungssoftware der Übersichtskamera detektiert dann beispielsweise einen oder mehrere helle Lichtpunkte im Sichtbereich der Übersichtskamera, welche jeweils einem reflektierenden Ziel entsprechen. Daraus kann deren Position im Bild der Übersichtskamera und daraus wiederum eine Änderung der Ausrichtung des Ziels, z.B. eines Messhilfsinstruments (z.B. Taster oder Scanner), ermittelt werden, womit das Messgerät bzw. der optische Aufbau 60 und die Lichtstrahlen des oder der Distanzmesser 61,63 auf das Ziel ausrichtbar sind. Damit sind somit eine automatische Zielerfassung und ein "Lock-on", d.h. eine fortlaufende Verfolgung des Ziels, der Distanzmesser 61,63 auf ein Ziel realisierbar.

Der Lichtanteil für den Positionswandler ist typischerweise ein Strahlenbündel von zurückkehrendem Licht, welches von einem der Distanzmesser 61,63, vorzugsweise von der Interferometeranordnung 61, ausgesendet wurde. Der Positionswandler kann eine eigene Optik und beispielsweise einen positionssensitiven Detektor (Tracking-Flächensensor, insbesondere PSD oder CCD) aufweisen, wobei am Ziel reflektierte Messlaserstrahlung auf diesem detektiert werden kann.

Als PSD ist in diesem Zusammenhang ein örtlich analog arbeitender Flächensensor zu verstehen, mit welchem ein Schwerpunkt einer Lichtverteilung auf der Sensorfläche bestimmt werden kann. Das Ausgangssignal des Sensors wird dabei vermittels einer oder mehrerer photosensitiver Flächen erzeugt und hängt von der jeweiligen Position des Licht-Schwerpunkts ab. Mittels einer nachgeschalteten oder integrierten Elektronik kann das Ausgangssignal ausgewertet werden und der Schwerpunkt ermittelt werden. Die Ermittlung der Position des Schwerpunkts des auftreffenden Lichtpunkts kann dabei sehr schnell (Nanosekundenbereich) und mit einer Sub-Nanometer-Auflösung erfolgen.

Mittels dieser PSD kann eine Ablage des Auftreffpunkts des erfassten Strahls von einem Servokontroll-Nullpunkt bestimmt und auf Basis der Ablage ein Nachführen des Laserstahls auf das Ziel erfolgen. Zu diesem Zweck und zum Erreichen einer hohen Genauigkeit ist das Sichtfeld dieser PSD vergleichsweise klein, d.h. korrespondierend zum Strahldurchmesser des Messlaserstrahls, gewählt. Eine Erfassung mit der PSD erfolgt koaxial zur Messachse, sodass die Erfassungsrichtung der PSD der Messrichtung entspricht. Die Anwendung des PSD-basierten Trackings und der Feinanzielung kann erst erfolgen, nachdem der Messlaser auf ein retro-reflektierende Ziel ausgerichtet worden ist (zumindest grob, d.h. derart, dass das Ziel innerhalb des Messlaser-Kegels liegt).

Figur 4 zeigt einen prinzipiellen Aufbau einer Interferometeranordnung 61a mit einem Ziel 91 für ein Messgerät, insbesondere für einen Lasertracker, wobei eine erfindungsgemässe Überprüfungsfunktionalität zur Überprüfung von Messergebnissen vorgesehen ist. Mittels der Strahlquelle 62, welche beispielsweise als Laserdiode oder Gaslaserquelle mit jeweils grosser Kohärenzlänge ausgebildet ist, wird eine (longitudinal) einmodige Messstrahlung mit einer Kohärenzlänge von mindestens 10m, vorzugsweise mindestens 50m, erzeugt, welche mit Strahlteilern zum einen auf einem Referenzpfad als Referenzstrahlung 72 und zum anderen auf einem Messpfad als Messstrahlung 73 geführt wird. Die Messstrahlung 73 wird auf das retro-reflektierende Ziel 91 gerichtet und dort zum Interferometeraufbau 61a zurück reflektiert. Das Ziel 91 stellt dabei ein bewegliches Ziel 91 dar, wobei eine Entfernungsänderung zum Interferometer mittels des Interferometerdetektors 77 feststellbar und messbar ist. Auf dem Interferometerdetektor 77 werden hierzu die Referenzstrahlung 72 und die reflektierte Messstrahlung 73a überlagert, wodurch diese Strahlen interferieren und zeitlich aufgelöst einen Interferenzverlauf als Ausgangsgrössenverlauf erzeugen, welcher vermittels des Interferometerdetektors 77 auslesbar ist. Eine solche Ausführungsform kann als (klassisches) homodynes Interferometer betrachtet werden. In einer speziellen Ausführungsform kann die Bestimmung der Entfernungsänderung hierzu mittels Quadraturdetektion erfolgen, wobei dann zusätzlich zur Entfernungsänderung eindeutig eine Richtung für die Entfernungsänderung bestimmt werden kann.

Bei Stattfinden einer Bewegung des Ziels 91 relativ zur Interferometeranordnung 61a derart, dass zumindest eine Distanz zwischen dem Ziel 91 und dem Aufbau 61a verändert wird, kann mittels des Detektors 77 eine Veränderung des Interferenzverlaufs (Ausgangsgrössenverlaufs) erfasst werden. Dabei kann eine alternierende Abfolge von durch die Interferenz erzeugte Intensitätsmaxima und Intensitätsminima detektiert werden. In diesem Zusammenhang können so genannte Interferometerpulse, d.h. erfasste Maxima und/oder Minima, ausgelesen und fortlaufend gezählt werden, sodass anhand einer bestimmten Anzahl von Pulsen eine Entfernungsänderung zwischen Ziel 91 und Interferometeraufbau 61a bestimmt werden kann.

Während einer solchen Messung mit dem Interferometer 61a wird erfindungsgemäss ein Überprüfungsverfahren zur Überprüfung der Messung hinsichtlich allfällig auftretender Messfehler angewendet. Hierfür wird zunächst ein durch das fortlaufende Detektieren des Intensitätszustandes vorliegender, zeitlich aufgelöster Interferenzverlauf derart analysiert, dass fortlaufend ein Bewegungsparameter für eine erkannte Relativbewegung zwischen Ziel 91 und Interferometer 61a abgeleitet wird. Dieser Parameter repräsentiert eine relative Bewegungsgrösse, z.B. Relativgeschwindigkeit oder Relativbeschleunigung, des Ziels 91 bzw. des Interferometers 61a.

Der fortlaufend abgeleitete Bewegungsparameter wird dann fortlaufend mit einem jeweiligen Kriterium für die jeweils bestimmte Bewegungsgrösse verglichen. Mittels des Kriteriums ist dabei die Bewegungsgrösse derart definiert, dass eine Unterscheidung zwischen möglich ausführbaren und unmöglich ausführbaren Bewegungen des Ziels 91 und/oder des Interferometers 61a auf Basis dieser Grösse durchführbar ist. Beispielsweise können im Rahmen des Kriteriums ein Bereich für realistisch auftretende Relativbeschleunigungen (Beschleunigung als Bewegungsgrösse) und ein Bereich für Beschleunigungen, welche derart gross sind, dass z.B. eine Beschleunigung des Ziels 91 unter geltenden physikalischen Bedingungen nicht vorstellbar bzw. durchführbar ist, definiert werden.

In Abhängigkeit des Vergleichs wird eine Information hinsichtlich der Richtigkeit bzw. der Plausibilität der vorgenommenen Messung generiert und bereitgestellt, welche z.B. akustisch oder graphisch visuell, insbesondere für einen Benutzer, ausgegeben wird.

Im Speziellen kann in Abhängigkeit des Vergleichs ein Schätzwert für die Vertrauenswürdigkeit der durchgeführten Messung bereitgestellt werden, wobei dieser Schätzwert z.B. auf Basis einer Ausgleichsrechnung für die durch den Interferenzverlauf repräsentierte Relativbewegung abgeleitet wird.

In einer alternativen Ausführungsform (hier nicht gezeigt) kann das Interferometer als heterodynes Interferometer (z.B. heterodynes Michelson-Interferometer) ausgeführt sein, wobei die Bestimmung der Entfernungsänderung mittels dieses Interferometers erfolgen kann und zudem eine Überprüfung des Ausgangsgrössenverlaufs erfolgen kann. Dabei wird in den beiden Armen des Interferometers (Messpfad und Referenzpfad) sich leicht hinsichtlich der Wellenlänge unterscheidende Strahlung verwendet. Nachdem die Messstrahlung mit einer ersten Wellelänge λ₀ an einem Ziel zum Interferometer zurück reflektiert wurde und die Referenzstrahlung mit einer zweiten Wellenlänge λ₁ den Referenzpfad durchlaufen hat, ergibt sich somit bei Zusammenführung der Strahlen eine Messüberlagerung (Schwebungszustand), die mit einem Messdetektor erfasst werden kann. Durch eine fortlaufende Erfassung der Messüberlagerung (Schwebungszustand) kann zudem ein zeitlich aufgelöster Schwebungsverlauf erfasst werden. Zumindest eine der Strahlungen (Messstrahlung bzw. Referenzstrahlung) kann dabei z.B. mit einem akustooptischen Modulator erzeugt werden, insbesondere durch eine bestimmte Modulationsfrequenz (z.B. 80 MHz), wobei eine elektronisch erzeugte Referenzgrösse in Abhängigkeit von einem Betriebsparameter (z.B. der Modulationsfrequenz) des Modulators generiert werden kann. Alternativ oder zusätzlich kann ein Teil der Strahlung (beider Wellenlängen) ausgekoppelt und ohne Reflexion am Ziel an einem Referenzdetektor als Referenzüberlagerung erfasst werden.

Basierend auf der mit dem Messdetektor erfassten Messüberlagerung und der elektronischen Referenzgrösse kann ein Phasenlagenvergleich in Abhängigkeit der Messüberlagerung und der Referenzgrösse erfolgen. Ausserdem kann basierend auf den mit den beiden Detektoren (Messdetektor und Referenzdetektor) erfassten Strahlungen ein Vergleich der Phasenlage zwischen der Messüberlagerung (Schwebung am Messdetektor) und der Referenzüberlagerung (Schwebung am Referenzdetektor) erfolgen. Ein solcher Vergleich basierend auf der elektronischen Referenzgrösse oder der Referenzüberlagerung wird im Rahmen der Erfindung als Interferometerausgangsgrösse verstanden. Aus einem fortlaufenden Erfassen dieses Vergleichs kann ein Phasenlagenverlauf als zeitaufgelöster Ausgangsgrössenverlauf erzeugt werden und eine Entfernungsänderung zum Ziel bestimmt werden.

Zur Erzeugung der Strahlungen mit unterschiedlichen Wellenlängen können hierbei beispielsweise den Zeeman-Effekt nutzende Laser (z.B. Mehrfrequenzlaser) oder akustooptische Modulatoren eingesetzt werden.

Im Rahmen des erfindungsgemässen Verfahrens zum Bestimmen der Entfernungsänderung mittels des heterodynen Interferometers ist die Interferometerausgangsgrösse dabei als Vergleich der Phasenlage zwischen der Schwebung am Messdetektor (Messüberlagerung) und der Schwebung am Referenzdetektor (Referenzüberlagerung) und der Ausgangsgrössenverlauf als ein fortlaufend erfasster derartiger Vergleich zu verstehen.

Im Zusammenhang mit einer weiteren, alternativen Ausführungsform kann die Interferometerausgangsgrösse als ein durch die Überlagerung der Messstrahlung und der Referenzstrahlung mit unterschiedlichen Wellenlängen definierter Schwebungszustand zu verstehen sein und der Ausgangsgrössenverlauf zu verstehen sein als ein fortlaufend erfasster Schwebungszustand (Schwebungsverlauf).

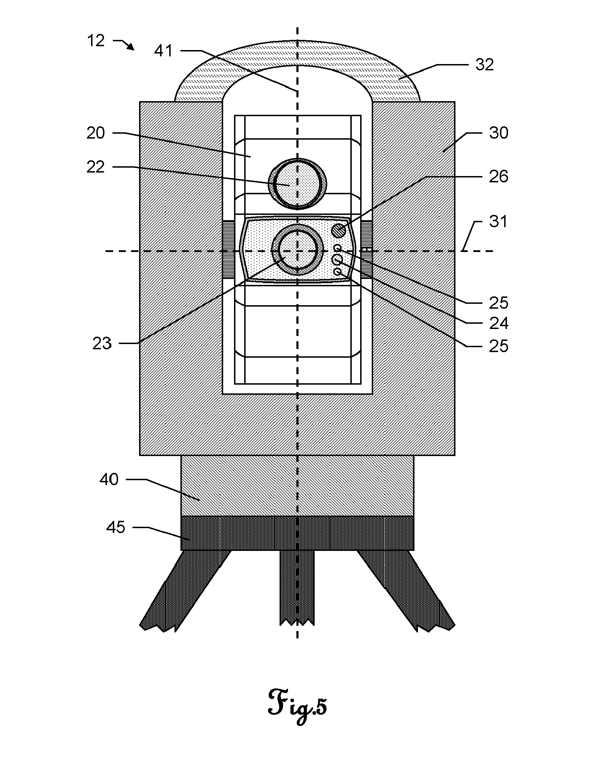

Figur 5 zeigt eine weitere Ausführungsform eines Lasertrackers 12 mit erfindungsgemässer Überprüfungsfunktionalität sowie mit einer Basis 40, die auf einem Stativ 45 angeordnet ist und eine Schwenkachse 41 definiert. Auf der Basis ist zudem eine eine Neigungsachse 31 (Kippachse) definierende, um die Schwenkachse 41 relativ zur Basis 40 schwenkbare Stütze 30 mit einem Griff 32 angeordnet. Weiters ist eine Anzieleinheit 20 vorgesehen, wobei diese Anzieleinheit 20 um die Neigungsachse 31 relativ zur Stütze 30 schwenkbar verbaut ist.

Die Anzieleinheit 20 weist ferner eine Variokamera mit einem Variokameraobjektiv 22 und eine Optik 23 auf, die einer in der Anzieleinheit 20 angeordneten Entfernungsmess-und Trackingeinheit zugeordnet ist, wobei vermittels der Optik 23 ein Messlaserstrahl von der Entfernungsmess- und Trackingeinheit zur präzisen Bestimmen einer Entfernung zu einem Ziel und zum Verfolgen des Ziels emittiert wird. Ausserdem ist an der Anzieleinheit 20 eine Zielsuchkameras24 mit einer Kameraoptik und mit einem positionssensitiven Detektor und zudem Beleuchtungsmittel 25, welche beispielsweise als LEDs ausgebildet sind und im Betrieb insbesondere Licht im Infrarotbereich emittieren, vorgesehen. Mit diesen Beleuchtungsmitteln 25 kann ein Ziel, z.B. ein Reflektor, beleuchtet bzw. angestrahlt werden und zumindest eine Teil der Strahlung durch den Reflektor in Richtung des Lasertrackers 12 bzw. in Richtung der Zielsuchkamera 24 zurückreflektiert werden. Das reflektierte Licht wird dann mit der Kamera 24 erfasst, vermittels der Kameraoptiken auf dem positionssensitiven Detektor abgebildet und die Position der Abbildung in einem Suchbild als Suchbildposition identifiziert. Hieraus kann nun für jede dieser Suchbildpositionen unter Berücksichtigung der Ausrichtung der Detektoren jeweils eine Richtung zum Ziel und somit ein Versatz relativ zu einer Nullposition auf dem jeweiligen Detektor und/oder ein Richtungswinkel für zwei Detektorachsen, z.B. für eine durch die Dimensionierung des Detektors vordefinierte X- und Y-Achse, bestimmt werden. Mittels dieser so erfassten Positionen des Ziels kann ein automatisiertes Auffinden des Ziels erfolgen.

Ferner weist der Lasertracker 12 eine Übersichtskamera 26 auf, welche in einem bekannten Positionsverhältnis zu der Zielsuchkamera 24 platziert ist. Das Sichtfeld der Übersichtskamera 26 (Übersichtssichtfeld) ist in dieser Ausführungsform derart ausgebildet, dass das Sichtfelde der Zielsuchkamera 24 mit dem Übersichtssichtfeld in einem gemeinsamen Bereich überlappt, sodass ein mit der Zielsuchkamera 24 erfassbares Ziel auch mit der Übersichtskamera 26 erfasst werden kann, insbesondere simultan.

Die der Anzieleinheit 20 zugeordnete Entfernungsmesseinheit weist zumindest ein Interferometer zur Bestimmung von Entfernungsänderungen auf. In Analogie zu der im Zusammenhang mit Figur 4 beschriebenen Überprüfungsprozedur für mit dem Interferometer durchgeführte Messungen wird auf dem Tracker 12 eine Überprüfungsfunktionalität ausgeführt, wobei der detektierte Ausgangsgrössenverlauf analysiert und hinsichtlich Korrektheit überprüft wird, insbesondere wobei als fehlerhaft bewertete Messungen gemeldet werden.

Es versteht sich, dass diese dargestellten Figuren nur mögliche Ausführungsbeispiele schematisch darstellen. Die verschiedenen Ansätze können erfindungsgemäss ebenso miteinander sowie mit Interferometrieverfahren zur Messung von Entfernungsänderungen, mit Verfahren zur Distanzbestimmung und mit gattungsgemässen Messgeräten, insbesondere Lasertrackern, des Stands der Technik kombiniert werden.

## Patentansprüche

1. Verfahren zum Bestimmen einer Entfernungsänderung zu einem beweglichen und reflektierenden Ziel (81,90,91) mittels Interferometrie, mit
• einem Aussenden von Messstrahlung (17,21,73) zum Ziel (81,90,91),
• einem Empfangen von zumindest einem Teil der am Ziel (81,90,91) reflektierten Messstrahlung (73a),
• einem Erzeugen und Erfassen einer Überlagerung der reflektierten Messstrahlung (73a) mit einer Referenzstrahlung (72),
• einem Ableiten einer Interferometerausgangsgrösse basierend zumindest auf der erfassten Überlagerung, wobei die Interferometerausgangsgrösse von einer Entfernung zum Ziel (81,90,91) abhängt,
• einem Erzeugen eines zeitaufgelösten Ausgangsgrössenverlaufs aus der abgeleiteten Interferometerausgangsgrösse und
• einem Ermitteln der Entfernungsänderung basierend auf dem Ausgangsgrössenverlauf,
**dadurch gekennzeichnet, dass**
ein fortlaufendes Überprüfen des Ausgangsgrössenverlaufs dadurch erfolgt, dass
• basierend auf dem Ausgangsgrössenverlauf fortlaufend zumindest ein sich auf die Richtung der Messstrahlung (17,21,73) beziehender Bewegungsparameter einer Relativbewegung des Ziels (81,90,91) abgeleitet wird,
• ein fortlaufendes Vergleichen des Bewegungsparameters mit einem definierten Bewegungskriterium des Ziels (81,90,91) erfolgt, wobei das Bewegungskriterium eine als real ausführbar, praktisch plausibel und empirisch angenommene Relativbewegung des Ziels (81,90,91) in Richtung der Messstrahlung (17,21,73) angibt, und
• bei einem Nicht-Erfüllen des Bewegungskriteriums eine Information bereitgestellt wird.

2. Verfahren nach Anspruch 1,
**dadurch gekennzeichnet, dass**
in Abhängigkeit von dem Bereitstellen der Information ein Korrigieren der ermittelten Entfernungsänderung durchgeführt wird und/oder eine graphische oder akustische Ausgabe erfolgt.

3. Verfahren nach Anspruch 2,
**dadurch gekennzeichnet, dass**
das Korrigieren derart erfolgt, dass ein nach dem Korrigieren ableitbarer Bewegungsparameter das Bewegungskriterium erfüllt, insbesondere wobei ein Anpassen des Ausgangsgrössenverlaufs derart erfolgt, dass der aus dem angepassten Ausgangsgrössenverlaufabgeleitete Bewegungsparameter das Bewegungskriterium erfüllt.

4. Verfahren nach einem der Ansprüche 1 bis 3,
**dadurch gekennzeichnet, dass**
im Rahmen des Ermittelns der Entfernungsänderung aus eine Abfolge von konstruktiver Interferenz und destruktiver Interferenz, insbesondere Intensitätsmaxima und Intensitätsminima, Interferometerpulse identifiziert und fortlaufend gezählt werden, insbesondere wobei aus einer in einem definierten Zeitintervall bestimmten Anzahl von Interferometerpulsen die Entfernungsänderung zum Ziel (81,90,91) bestimmt wird.

5. Verfahren nach einem der Ansprüche 1 bis 4,
**dadurch gekennzeichnet, dass**
aus dem Ausgangsgrössenverlauf eine aktuelle Relativgeschwindigkeit und/oder aktuelle Relativbeschleunigung (56,56a) des Ziel (81,90,91) in Richtung der Messstrahlung (17,21,73) als Bewegungsparameter abgeleitet werden.

6. Verfahren nach einem der Ansprüche 1 bis 5,
**dadurch gekennzeichnet, dass**
in Abhängigkeit von dem Ausgangsgrössenverlauf eine, insbesondere zeitaufgelöste, Intensitätskurve (53,53a) abgeleitet wird, insbesondere wobei aus einer Amplitude und/oder einer Frequenz der Intensitätskurve (53,53a) der Bewegungsparameter abgeleitet wird.

7. Verfahren nach Anspruch 6,
**dadurch gekennzeichnet, dass**
der Bewegungsparameter als eine Frequenzänderung und/oder Amplitudenänderung aus der Intensitätskurve (53,53a) bestimmt wird.

8. Verfahren nach einem der Ansprüche 1 bis 7,
**dadurch gekennzeichnet, dass**
ein Toleranzbereich für den Bewegungsparameter bestimmt wird und der Toleranzbereich als das Bewegungskriterium definiert wird, insbesondere wobei der Toleranzbereich durch zumindest einen Schwellwert (57a,57b) definiert ist.

9. Verfahren nach einem der Ansprüche 1 bis 8,
**dadurch gekennzeichnet, dass**
eine reale als maximal angenommene Relativgeschwindigkeit und/oder eine reale als maximal angenommene Relativbeschleunigung des Ziels (81,90,91) in Richtung der Messstrahlung (17,21,73) als Bewegungskriterium herangezogen werden, insbesondere wobei die reale Relativgeschwindigkeit und/oder die reale Relativbeschleunigung fortlaufend gemessen und fortlaufend als Bewegungskriterium gesetzt werden.

10. Verfahren nach einem der Ansprüche 1 bis 9,
**dadurch gekennzeichnet, dass**
die Messstrahlung (17,21,73) longitudinal monomodig mit einer definierten Emissionswellenlänge und mit einer Kohärenzlänge von mindestens 10m mittels einer Laserdiode erzeugt wird.

11. Verfahren nach einem der Ansprüche 1 bis 10,
**dadurch gekennzeichnet, dass**
das Verfahren mit einem Messgerät (10,11,12) mit Interferometereinheit ausgeführt wird, insbesondere wobei das Messgerät (10,11,12) als
Lasertracker (10,11,12) zum fortlaufenden Verfolgen des Ziels (81,90,91) und zum Positionsbestimmen des Ziels (81,90,91) ausgebildet ist, wobei der Lasertracker aufweist
• eine Strahlquelle (62) zur Erzeugung von Laserstrahlung (17,21,72,73,73a) und einen Strahlteiler (71) zur Aufteilung der Laserstrahlung (17,21,72,73,73a) in zumindest die Referenzstrahlung (72) und die Messstrahlung (17,21,73),
• eine eine Stehachse (41) definierende Basis (40),
• eine Strahllenkeinheit zur Emission der Messstrahlung (17,21,73) und zum Empfang der am Ziel (81,90,91) reflektierten Messstrahlung (73a), wobei die Strahllenkeinheit um die Stehachse (41) und eine im Wesentlichen orthogonal zur Stehachse stehende Neigungsachse (31) relativ zur Basis (40) motorisiert schwenkbar ist,
• eine Entfernungsmesseinheit zum Bestimmen einer Entfernungsänderung zum Ziel (81,90,91) und
• eine Winkelmessfunktionalität zur Bestimmung einer Ausrichtung der Strahllenkeinheit relativ zur Basis (40).

12. Messgerät (10,11,12) zur Bestimmung einer Entfernungsänderung zu einem reflektierenden Ziel (81,90,91) mittels Interferometrie mit
• einer Aussendeeinheit (62) zur Emission von Messstrahlung (17,21,73),
• einer Empfangseinheit zum Empfang von zumindest einem Teil der am Ziel (81,90,91) reflektierten Messstrahlung (73a),
• einer Überlagerungskomponente zur Erzeugung einer Überlagerung der reflektierten Messstrahlung (73a) mit einer Referenzstrahlung (72),
• einem photosensitiven Detektor (77) zur fortlaufenden Erfassung der Überlagerung und
• einer Auswerteeinheit
□ zur Ableitung einer Interferometerausgangsgrösse basierend zumindest auf der erfassten Überlagerung, wobei die Interferometerausgangsgrösse von einer Entfernung zum Ziel (81,90,91) abhängt,
□ zur Erzeugung eines zeitaufgelösten Ausgangsgrössenverlaufs aus der abgeleiteten Interferometerausgangsgrösse und
□ zur Ermittlung der Entfernungsänderung basierend auf dem Ausgangsgrössenverlauf,
**dadurch gekennzeichnet, dass**
die Auswerteeinheit ausgebildet ist zur dadurch erfolgenden fortlaufenden Überprüfung des Ausgangsgrössenverlaufs, dass
• basierend auf dem Ausgangsgrössenverlauf fortlaufend zumindest ein Bewegungsparameter für eine in Richtung der Messstrahlung (17,21,73) ausführbare Relativbewegung des Ziels (81,90,91) abgeleitet wird,
• ein fortlaufendes Vergleichen des Bewegungsparameters mit einem definierten Bewegungskriterium des Ziels (81,90,91) erfolgt, wobei das Bewegungskriterium eine als real ausführbar, praktisch plausibel und empirisch angenommene Relativbewegung des Ziels (81,90,91) in Richtung der Messstrahlung (17,21,73) angibt, und
• bei einem Nicht-Erfüllen des Bewegungskriteriums eine Information bereitgestellt wird.

13. Messgerät (10,11,12) nach Anspruch 12,
**dadurch gekennzeichnet, dass**
die Auswerteeinheit ausgebildet ist zur Ausführung eines Verfahrens nach einem der Ansprüche 1 bis 11.

14. Messgerät (10,11,12) nach Anspruch 12 oder 13,
**dadurch gekennzeichnet, dass**
das Messgerät (10,11,12) als Lasertracker (10,11,12) zur fortlaufenden Verfolgung des Ziels (81,90,91) und zur Positionsbestimmung des Ziels (81,90,91) ausgebildet ist, mit
• der als Strahlquelle ausgebildeten Aussendeeinheit (62) zur Erzeugung von Laserstrahlung (17,21,72,73,73a) und einem Strahlteiler (71) zur Aufteilung der Laserstrahlung (17,21,72,73,73a) in zumindest die Referenzstrahlung (72) und die Messstrahlung (17,21,73),
• einer eine Stehachse (41) definierenden Basis (40),
• einer Strahllenkeinheit zur Emission der Messstrahlung (17,21,73) und zum Empfang der am Ziel (81,90,91) reflektierten Messstrahlung (73a), wobei die Strahllenkeinheit um die Stehachse (41) und eine im Wesentlichen orthogonal zur Stehachse stehende Neigungsachse (31) relativ zur Basis (40) motorisiert schwenkbar ist,
• einer Interferometereinheit (61,61a) zum Bestimmen der Entfernungsänderung zum Ziel (81,90,91) und
• einer Winkelmessfunktionalität zur Bestimmung einer Ausrichtung der Strahllenkeinheit relativ zur Basis (40),
insbesondere wobei der Lasertracker (10,11,12) aufweist
• eine um die Stehachse (41) relativ zur Basis (40) motorisiert schwenkbare und die Neigungsachse (31) definierende Stütze (30) und
• eine als Strahllenkeinheit ausgebildete, um die Neigungsachse (31) relativ zur Stütze (30) motorisiert schwenkbare Anzieleinheit (20) mit einer Teleskopeinheit zur Emission der Messstrahlung (17,21,73) und zum Empfang von zumindest einem Teil der am Ziel (81,90,91) reflektierten Messstrahlung (73a).

15. Computerprogrammprodukt, das auf einem maschinenlesbaren Träger gespeichert ist, zur Ausführung der fortlaufenden Überprüfung durch
• Ableiten des Bewegungsparameters,
• Vergleichen des Bewegungsparameters mit dem Bewegungskriterium und
• Bereitstellen der Information,
insbesondere zur Ausführung des Erzeugens des Ausgangsgrössenverlaufs und des Ermittelns der Entfernungsänderung,
des Verfahrens nach einem der Ansprüche 1 bis 11, insbesondere wenn das Computerprogrammprodukt auf einer Auswerteeinheit eines Messgeräts (10,11,12) nach einem der Ansprüche 12 bis 14 ausgeführt wird.
